(19) **Europäisches Patentamt**

**European Patent Office**

**Office européen des brevets**

(11) **EP 0 619 208 B1**

(12) **EUROPEAN PATENT SPECIFICATION**

(45) Date of publication and mention
of the grant of the patent:
**24.10.2001 Bulletin 2001/43**

(51) Int Cl.⁷: **B60T 8/00**

(21) Application number: **94105316.7**

(22) Date of filing: **06.04.1994**

(54) **Anti-lock brake controlling apparatus**

Steuergerät für Antiblockier-Bremsen

Appareil de commande de frein anti-bloquant

(84) Designated Contracting States:
**DE FR GB**

(30) Priority: **07.04.1993 JP 8067493**

(43) Date of publication of application:
**12.10.1994 Bulletin 1994/41**

(73) Proprietor: **Sumitomo Electric Industries, Ltd.**
**Osaka 541 (JP)**

(72) Inventor: **Fujioka, Hideaki, c/o Itami Works**
**Itami-shi, Hyogo (JP)**

(74) Representative: **Lehn, Werner, Dipl.-Ing. et al**
**Hoffmann Eitle,**
**Patent- und Rechtsanwälte,**
**Arabellastrasse 4**
**81925 München (DE)**

(56) References cited:
**EP-A- 0 363 570          WO-A-92/19479**
**DE-A- 3 119 153          DE-A- 4 221 909**

**Description**

BACKGROUND OF THE INVENTION

The present invention generally relates to an anti-lock brake controlling apparatus.

EP-A1-0 363 570 discloses an anti-lock brake controlling apparatus which includes a master cylinder for feeding an operation fluid onto the side of a wheel cylinder in accordance with the actuation of a brake pedal, and a fluid pressure controlling valve for controlling the fluid pressure of said wheel cylinder. The anti-lock brake controlling apparatus uses a sensor which measures the strain of a tire or the strain around the wheel of a vehicle for determining the road surface friction. The vehicle anti-lock brake controlling apparatus is adapted to cyclically increase the pressure of brake fluid while the road surface frictional force increases in response to elevation of brake fluid pressure, decrease the brake fluid pressure when the road surface frictional force declines despite elevation of brake fluid pressure, and increase the brake fluid pressure again when the road surface frictional force has declined in response to fall-off of brake fluid pressure.

An anti-lock brake controlling apparatus is adapted to detect a sinking quantity of a wheel speed with respect to a estimated vehicle body speed from the wheel speed, a skid situation of a wheel from addition and subtraction speed and so on of the wheel, and prevent locks from being caused through regulation by correspondingly adding and subtracting a wheel cylinder fluid pressure, thus shortening a braking distance, and ensuring stability and steerability.

Such anti-lock controlling apparatus demands that friction coefficients on road surfaces on which a vehicle runs be correctly grasped so as to effect a more suitable controlling operation, and a controlling operation considering it be effected.

It is preferable to consider the road surface friction coefficients to estimate the vehicle body speed, because falling and rising speeds of the vehicle body speed, namely, vehicle body adding and subtracting speeds are subjected to influences of the road surface friction coefficients.

Generation of a lock symptom is also subjected to influences of the road surface friction coefficients. On the road surface (high μ road surface) where friction coefficients are high on the road surface of asphalt or the like, the lock symptoms are hard to be caused on wheels even if the wheel cylinder fluid pressure becomes higher. On the road surface (low μ road surface) where friction coefficients are low on the road surface such as snow covered road, ice covered road or the like, lock symptoms are likely to be caused even when the wheel cylinder fluid pressure is relatively low.

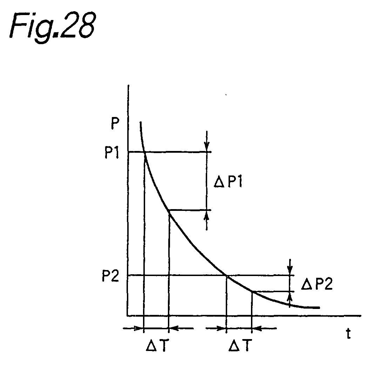

The road surface friction coefficients have to do . with a period of reduction time of a wheel cylinder fluid pressure in the anti-lock controlling operation. When the pressure of the wheel cylinder fluid by the switching operation of a so-called on / off type solenoid valve in the above described anti-lock brake controlling apparatus, a pressure reducing characteristic is in approximate exponential function relation with respect to the opened time of the solenoid valve as shown in Fig. 28. When a case where the pressure is reduced from the value of P1 of relatively high pressure is compared in Fig. 28 with a case where the pressure is reduced from P2 (which corresponds to low μ road surface) lower in pressure than P1 (which corresponds to high μ road surface), the reduction pressure width ΔP1 in the former case becomes larger than the reduction pressure width ΔP2 in the latter case. Therefore, a stop distance is extended because of excessive reduction pressure when the pressure reduction time in the anti-lock controlling operation has been excessively set in spite of high μ road surface. Setting the pressure reducing time short in spite of the low μ road surface, and a so-called cascade lock where the four wheels of an automobile are directed at locking has a risk of being caused because of insufficient of pressure reduction.

On the other hand, an anti-lock brake controlling apparatus for estimating the road surface μ from the increasing and decreasing speed of the vehicle body, and an anti-lock brake controlling apparatus provided with a sensor for directly measuring the road surface μ are provided.

An anti-lock brake control apparatus of a type which estimates the road surface μ from the increasing and decreasing speeds of the above described vehicle body judges that the road surface which is low μ is a high μ road surface when the wheel speed of four wheels once starts reducing at a time, and becomes insufficient in pressure reproduction, thus having a risk of further increasing a tendency of cascade lock.

A sensor for directly detecting the above described road surface μ is expensive, thus increasing a manufacturing cost.

SUMMARY OF THE INVENTION

Accordingly, the present invention has been developed with a view to substantially eliminating the above discussed drawbacks inherent in the prior art, and has for its essential object to provide an improved anti-lock controlling apparatus at a lower cost.

Another important object of the present invention is to provide an improved anti-lock controlling apparatus which can precisely estimate the road surface μ and preferably control by making the estimate road surface μ one of controlling factors.

In accomplishing these and other objects, according to the present invention, there is provided an anti-lock brake controlling apparatus having the features according to claim 1.

Preferably, the present invention comprises a wheel speed detecting means for detecting the speed of each wheel of a vehicle, a wheel movement calculating means for calculating the wheel movements including at least a wheel speed in accordance with a signal from the wheel speed detecting means, an estimated vehicle body speed calculating means for calculating the estimated vehicle body speed for each wheel in accordance with the wheel movements calculated by the above described wheel movements calculating means and the detected stepping quantity of the brake pedal.

It is preferable that the above described estimated vehicle body speed calculating means is adapted to increase the maximum descent speed of the above described estimated vehicle body speed in accordance with the increase of the stepping quantity detected by the above described pedal stroke quantity detecting means.

Further, it is preferable that the above described estimated vehicle body speed calculating means is adapted to increase the maximum descent speed of the estimated vehicle body speed for a wheel on a road surface where a road surface friction coefficient is larger, the event that the friction coefficients of the road surface where the vehicle is running show a large difference between the right-hand side and the left-hand side of the vehicle, and to set it to a value greater than the maximum descent speed for a road surface having uniform friction coefficients.

Further, it is preferable that the above described estimated vehicle body speed calculating means is adapted to increase, in accordance with an increase in the stepping quantity detected by the above decreased pedal stroke quantity detecting means, the maximum descent speed of the estimated vehicle body speed corresponding to a wheel positioned on the external side of a turning radius when the vehicle is turning (on a corner), and to set it to a value greater than the maximum descent speed for a case when the vehicle travels straight ahead.

Further, the above described estimated vehicle body speed calculating means is preferably adapted to set the maximum descent speed of the estimated vehicle body speed so that it may be increased in accordance with the increase of a value which is the greater one of the stepping quantity in each control cycle detected by the above described pedal stroke quantity detecting means and the stepping quantity at a skid cycle starting time.

Also, it is preferable that the above described estimated vehicle body speed calculating means is adapted to regulate a bottom value of the estimated vehicle body speed with a value obtained by subtracting a given deviation quantity form a maximum value of the estimated vehicle body speed of each wheel so as to increase the deviation quantity in accordance with the increase of a value which is the larger one of the stepping quantity of each control cycle and the stepping quantity at the starting time of a skid cycle.

An anti-lock brake controlling apparatus according to the present invention may be provided with a wheel speed detecting means for detecting the speed of each wheel of a vehicle, a wheel movements calculating means for calculating the wheel movements including at least wheel speed in accordance with a signal from the wheel speed detecting means, a lock symptom detecting means for detecting a lock symptom in accordance with the wheel movements calculated by the above described wheel movements calculating means and the stepping quantity of the brake pedal detected by the above described pedal stroke quantity detecting means.

It is preferable that the above described lock symptom detecting means is adapted to increase the detection sensitivity for the lock symptoms if the stepping quantity of the brake pedal detected by the above described pedal stroke quantity detecting means is smaller.

Also, the above described lock symptom detecting means may be adapted to increase the detection sensitivity for the lock symptoms if a value which is the larger one of the stepping quantity of the brake pedal at each control cycle detected by the above described pedal stroke quantity detecting means and the stepping quantity of the brake pedal at the skid cycle start time, is smaller.

An anti-lock brake controlling apparatus according to the present invention, is constituted such that the above described fluid pressure control valve is composed of a solenoid valve, the wheel cylinder is adapted to be supplied with increased or reduced fluid pressure by a switching operation of the solenoid valve, and comprises a wheel speed detecting means for detecting the speed of each wheel of a vehicle, a wheel movements calculating means for calculating the wheel movements including at least a wheel speed in accordance with a signal from the wheel speed detecting means, a pressure increasing or reducing signal setting means for setting a pressure increasing or reducing signal which is an instruction for a switching operation with respect to the above described solenoid valve, and the pressure increasing or reducing signal setting means may set the pressure increasing or reducing signal for reducing the fluid pressure of the wheel cylinder in accordance with the wheel movements calculated by the above described wheel movements calculating means and a stepping quantity of the brake pedal detected by the above described pedal stroke quantity detecting means based on the angle or linear movement of the brake pedal.

It is preferable that the above described pressure increasing or reducing signal setting means is adapted to correct, in accordance with the stepping quantity of the brake pedal detected by the above described pedal stroke quantity detecting means, the pressure increasing or reducing signal for reducing the fluid pressure of the wheel cylinder set in accordance with the wheel movements calculated by the above described wheel movements calculating means.

The above described pressure increasing or reducing signal setting means may correct, in accordance with a value which is the larger one of the stepping quantity of the brake pedal at each control cycle and a stepping quantity at a skid cycle starting time, the pressure increasing or reducing signal for reducing the fluid pressure of the wheel cylinder set in accordance with the wheel movements calculated by the above described wheel movements calculating means.

Further, the above described pressure increasing or reducing signal setting means may correct, in accordance with the difference between right and left road surface friction coefficients, the pressure increasing or reducing signal set in accordance with the wheel movements calculated by the above described wheel movements calculating means and the stepping quantity of the brake pedal detected by the pedal stroke detecting means, when the road surface friction coefficients on the road surface on which a vehicle is running, show a large difference on the right and left sides of the vehicle.

An anti-lock brake controlling means according to the present invention can effect an ideal control operation, because an anti-clock controlling operation is effected with the stepping quantity of a brake pedal corresponding to the road surface friction coefficient as one factor of the controlling operation.

The present invention can estimate the vehicle body speed with high accuracy, considering the road surface friction coefficients when the estimated vehicle body speed calculating means is adapted to calculate the estimated vehicle body speed for each wheel in accordance with the wheel movements calculated by the wheel movements calculating means and the stepping quantity of the brake pedal detected by the pedal stroke quantity detecting means.

The estimated vehicle body speed calculating means can obtain an estimated vehicle body speed of high accuracy for each wheel even if the road surface is a split road surface when the maximum descent speed of the estimated vehicle body speed corresponding to a wheel positioned on a road surface where a road surface friction coefficient is larger is increased in accordance with the increase in the stepping quantity detected by the above described pedal stroke quantity detecting means, in a case where the road surface friction coefficient on the road surface where the vehicle is running shows a large difference on the right and left sides of the vehicle, and is set to a value greater than the maximum descent speed for a uniform road surface.

The above described estimated vehicle body speed calculating means can obtain the estimated vehicle body speed of high accuracy even during turning when the maximum descent speed of the estimated vehicle body speed corresponding to the wheel positioned on the external side of the turning radius is increased in accordance with the increase in the stepping quantity detected by the above described pedal stroke quantity detecting means, during the turning operation of the vehicle, and can set a value larger than the maximum descent speed when the vehicle travels straight ahead.

Also, the above described estimated vehicle body speed calculating means can effect an ideal controlling operation, removing the dispersion of the estimated vehicle body speed when the maximum descent speed of the estimated vehicle body speed is set to increase in accordance with increase of a value which is the larger one of the stepping quantity at each control cycle detected by the above described pedal stroke quantity detecting means and the stepping quantity at the skid cycle starting time.

The present invention can detect the lock symptom with a proper sensitivity corresponding to the road surface friction coefficient when the lock symptom detecting means is adapted to detect the lock symptom in accordance with the wheel movements calculated by the wheel movements calculating means and the stepping quantity of the brake pedal detected by the above described pedal stroke quantity detecting means.

The present invention can set the pressure reduction time at the anti-lock pressure reduction time in accordance with road surface friction coefficients, and prevent excessive pressure reduction on the high μ road surface and insufficient pressure reduction on the low μ road surface when the pressure increasing or reducing signal setting means for setting the pressure increasing or reducing signal which is an instruction of a switching operation with respect to a solenoid valve, which is a fluid pressure control valve, is adapted to set the pressure increasing or reducing signal where the wheel cylinder fluid pressure is reduced in accordance with the wheel movements calculated by the above described wheel movements calculating means and the stepping quantity of the brake pedal detected by the above described pedal stroke quantity detecting means.

If, in a case of the split road surface, the pressure increasing or reducing signal set in accordance with the wheel movements calculated by the wheel movements calculating means and the stepping quantity of the brake pedal calculated by the pedal stroke detecting means is corrected in accordance with the difference of the right and left road surface friction coefficients, a proper pressure increasing or reducing signal can be set for each wheel with respect to a solenoid valve corresponding to the wheel cylinder even if the road surface is a split road surface.

## BRIEF DESCRIPTION OF THE DRAWINGS

These and other objects and features of the present invention will become apparent from the following description of the preferred embodiments thereof with reference to the accompanying drawings, in which;

Fig. 1 is a schematic block diagram showing a first embodiment of the present invention;
Fig. 2 is a schematic block diagram showing a signal processing portion of the first embodiment;
Fig. 3 is a flow chart showing the operation in the first embodiment;
Fig. 4 is a flow chart showing the details of a step #3 of Fig. 3;
Fig. 5 is a block diagram showing the relation between a pedal stroke quantity and a maximum descent speed;
Fig. 6 is a flow chart showing the detail of a step #4 of Fig. 3;
Fig. 7 is a flow chart showing the details of a step #5 of Fig. 3;
Fig. 8 is a block diagram showing one example of an operation in the first embodiment;
Fig. 9 is a partial view of a flow chart showing a modified example in the first embodiment;
Fig. 10 is a schematic block diagram showing a second embodiment of the present invention;
Fig. 11 is a flow chart showing an operation in a second embodiment;
Fig. 12 is a flow chart showing the details of a step #7 of Fig. 11;
Fig. 13 is a partial view of a flow chart showing the second embodiment;
Fig. 14 (A) and Fig.14 (B) are respectively partial views of a flow chart showing the second embodiment;
Fig. 15 is a block diagram showing one example of an operation of the second embodiment ;
Fig. 16 (A) and Fig. 16 (B) are respectively partial views of a flow chart showing a third embodiment of the present invention;
Fig. 17 is a partial view of a flow chart showing a fourth embodiment of the present invention;
Fig. 18 is a block diagram showing the relation between a pedal stroke and a deviation quantity;
Fig. 19 is a schematic block diagram showing a fifth embodiment of the present invention;
Fig. 20 (A) and Fig. 20 (B) are respectively partial views of a flow chart showing the fifth embodiment ;
Fig. 21 is a schematic graph showing one example of an operation of the fifth embodiment;
Fig. 22 is a schematic block diagram showing a sixth embodiment of the present invention;
Fig. 23 is a partial view of a flow chart showing the sixth embodiment;
Fig. 24 is a block diagram showing the relation between the pedal stroke quantity and the correcting quantity;
Fig. 25 is a schematic block diagram showing a seventh embodiment of the present invention;
Fig. 26 is a partial view of a flow chart showing the seventh embodiment ;
Fig. 27 is a block diagram showing one example of an operation of the seventh embodiment; and
Fig. 28 is a block diagram showing the pressure reducing characteristic of a solenoid valve.

## DETAILED DESCRIPTION OF THE INVENTION

Before the description of the present invention proceeds, it is to be noted that like parts are designated by like reference numerals throughout the accompanying drawings.

The present invention will be described hereinafter in detail with reference to the drawings.

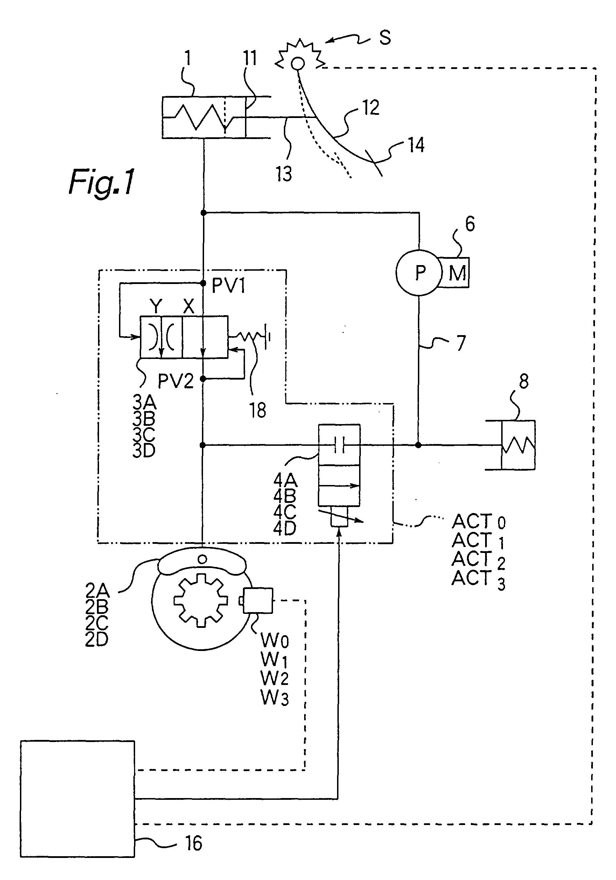

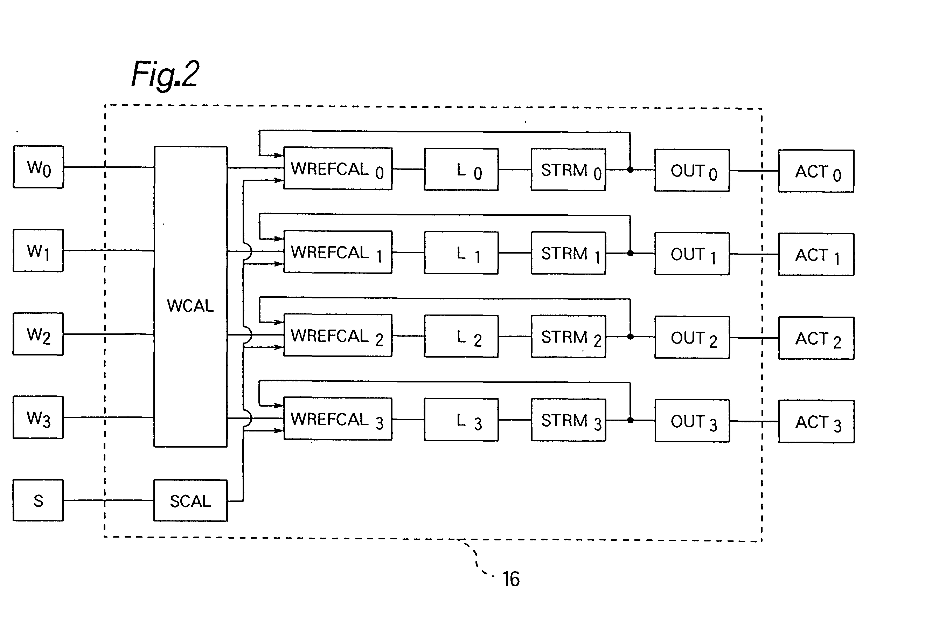

Fig. 1 and Fig. 2 show an anti-lock brake controlling apparatus in accordance with a first embodiment of the present invention. A control object of the anti-lock brake controlling apparatus is a four-wheel automobile having a front wheel drive.

As shown in Fig. 1, there are disposed inlet • valves 3A, 3B, 3C, 3D composed of mechanical valves between a master cylinder 1 and the wheel cylinders 2A, 2B, 2C, 2D corresponding respectively to a left front wheel, a right front wheel, a left rear wheel, a right rear wheel. There is disposed a reflux line 7 refluxing from the above described wheel cylinders 2A through 2D onto the side of a master cylinder 1 through outlet valves 4A, 4B, 4C, 4D composed of a normally closed on / off type solenoid valve and a motor pump 6. On the reflux line 7, there is disposed a reservoir 8 between the outlet valves 4A through 4D and a motor pump 6.

A fluid pressure PV1 on the upstream side and a fluid pressure PV2 on a downstream side are applied upon the inlet valves 3A through 3D composed of the above described mechanics valves. An urging force of a spring means 18 is applied in a direction the same as that of the fluid pressure PV2.

Although a position becomes a X position shown at a normal time in the inlet valves 3A through 3D, the fluid pressure PV1 on the upstream side becomes greater than the fluid pressure PV2 on the downstream side. When the difference between them exceeds the urging force of the above described spring means 18, the position becomes a Y position shown. The fluid pressure of the wheel cylinder 1 is fed onto the sides of the wheel cylinders 2A through 2D through an orifice.

The anti-lock controlling apparatus closes the outlet valves 4A through 4D when the fluid pressure of the

EP 0 619 208 B1

wheel cylinders 2A through 2B is applied during the anti-lock controlling operation, and opens the outlet valves 4A through 4D when the fluid is reduced.

The above described inlet valves 3A through 3D may be normally open on / off type solenoid valves. In this case, the fluid pressure is controlled by three modes, a pressure reducing mode wherein the inlet valves 3A through 3D are opened and the outlet valves 4A through 4D are turned off at the time of normal operation of the brake, and the inlet valves 3A through 3D are closed, the outlet valves 4A though 4D are opened at the anti-lock controlling time, a retaining mode wherein both the inlet valves 3A through 3D and the outlet valves 4A though 4D are closed, a pressure increasing mode wherein the inlet valves 3A through 3D are opened, the outlet valves 4A through 4D are closed.

Reference characters $W_0$, $W_1$, $W_2$, $W_3$ denote a wheel speed detecting means. The accompanied numerals 0, 1, 2, 3 show a left front wheel, a right front wheel, a left rear wheel, a right rear wheel respectively. The wheel speed detecting means $W_0$ through $W_3$ respectively detect the speed of the wheel corresponding to the accompanied number so as to feed it to a signal processing portion 16 to be described later as a wheel speed signal.

Reference character S is a pedal stroke quantity detecting means. The pedal stroke quantity detecting means S is adapted to detect the stepping quantity (pedal stroke quantity) of the brake pedal 14 coupled through a lever 12 and a rod 13 to the piston 11 of the master cylinder 1. When the brake pedal 14 has moved to a dotted line in Fig. 1 by the stepping operation of a driver from a condition of a brake non-operation time shown with a solid line in Fig. 1, the detecting means S detects the stepping quantity so as to feed it to a signal processing potion 16.

A pedal stroke quantity detecting means S in the first embodiment is composed of a known encoder for detecting a turning angle of a lever 12 so as to detect the stepping quantity of a brake pedal 14 as a rotary angle of the lever 12. The pedal stroke quantity detecting means S may use a secondary position sensor of a differential transformer type which detects, for example, the movement quantity of the above described rod 13, without being restricted to the above described encoder.

The signal processing portion 16 is composed of micro computers, and comprises, as shown in Fig. 2, a wheel movements calculating means WCAL, a pedal stroke quantity calculating means SCAL, an estimated vehicle body speed calculating means $WREFCAL_0$, $WREFCAL_1$, $WREFCAL_2$, $WREFCAL_3$, lock symptom detecting means $L_0$, $L_1$, $L_2$, $L_3$, a pedal stroke quantity storing means $STRM_0$, $STRM_1$, $STRM_2$, $STRM_3$, a solenoid signal setting means $OUT_0$, $OUT_1$, $OUT_2$, $OUT_3$.

Reference numerals $ACT_0$, $ACT_1$, $ACT_2$, $ACT_3$ are actuators each being provided with the above described inlet valves 3A through 3D, the outlet valves 4A through 4D.

Wheel speed signals are inputted from the above described wheel speed detecting means $W_0$ through $W_3$ to the wheel movements calculating means WCAL. A wheel speed $SPEED_i$ (i = 0, 1, 2, 3), a first differential value of the wheel speed $SPEED_i$, and a second differential value of the wheel speed $SPEED_i$ are calculated from the signal.

A signal is inputted from the above described pedal stroke quantity detecting means to the pedal stroke quantity calculating means SCAL. The pedal stroke quantity STR calculated from the signal is outputted to estimated vehicle body speed calculating means $WREFCAL_0$ through $WREFCAL_3$.

The above described wheel speed $SPEED_i$, a pedal stroke quantity STR at each control cycle, a pedal stroke quantity $STRE_i$ at the skid cycle starting time to be described later are inputted to the estimated vehicle body speed calculating means $WREFCAL_0$ through $WREFCAL_3$ so as to calculate the estimated vehicle body speed $WREF_i$ about each wheel from them.

Lock symptom detecting means $L_0$ through $L_3$ detect the existence of the lock symptoms of each wheel from the differential values of the above described estimated vehicle body speed $WREF_1$, the vehicle wheel speed $SPEED_1$.

Pedals stroke quantity storing means $STRM_0$, through $STRM_3$ store and retain the pedal stroke quantity $STRE_i$ at the skid cycle start time of the wheel, namely, at a lock symptom detecting edge.

Pressure increasing, reducing signal setting means $OUT_0$ through $OUT_3$ set a pressure increasing, reducing signal $K_i$ for opening, closing with respect to outlet valves 4A through 4B so as to output the pressure increasing, reducing signal $K_i$ to actuators $ACT_0$ through $ACT_3$.

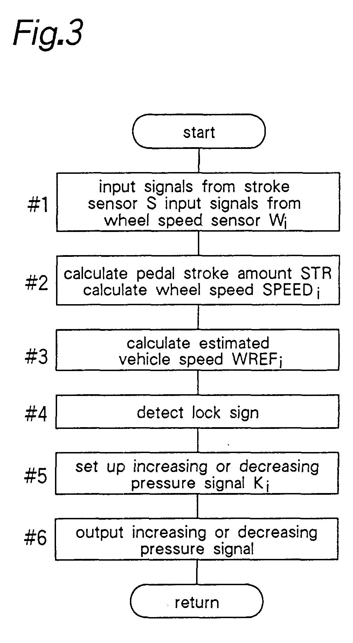

An operation in the first embodiment will be described hereinafter with reference to a flow chart shown in Fig. 3. A signal processing portion 16 effects a calculating operation shown in Fig. 3 at a constant period (control cycle). In the first embodiment, a period of time for a first control cycle is set to 8 msec..

In a step #1, wheel speed signals from the wheel speed detecting means $W_0$ trough $W_3$ are inputted to a wheel movements calculating means WCAL to the wheel movements calculating means WCAL, and also, a signal from the pedal stroke quantity detecting means S is inputted to a pedal stroke quantity calculating means SCAL.

In a step #2, the wheel movements calculating means WCAL calculates a wheel speed $SPEED_i$, a differential value d/dt $SPEED_i$ and data of the wheel speed signal $SPEED_i$ and a second differential value $d^2/dt^2 SPEED_i / dt^2$ of the wheel speed signal $SPEED_i$ about each wheel. The pedal stroke quantity calculating means SCAL calculates the pedal stroke quantity STR.

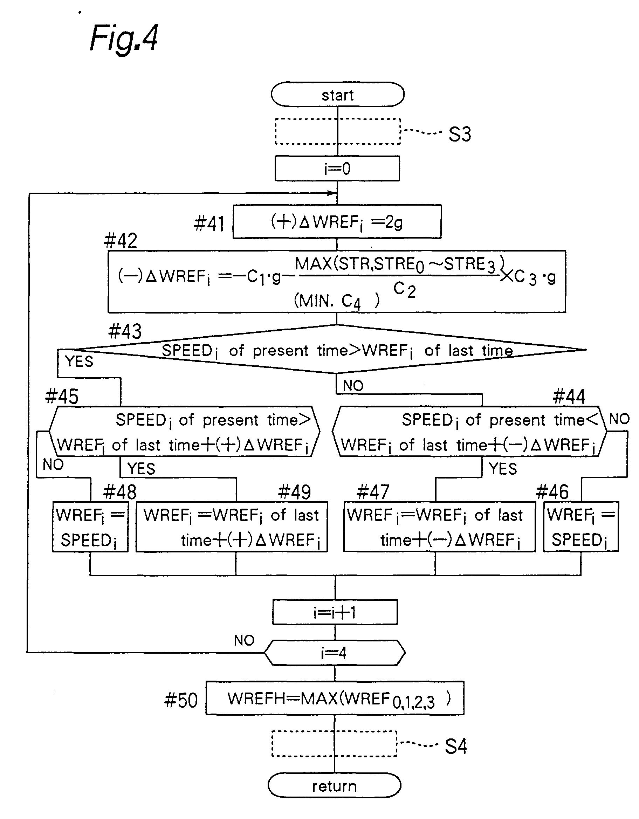

In a step #3, estimated vehicle body speed calculating means $WREFCAL_0$ through $WREFCAL_3$ calculate the estimated vehicle body speed $WREF_i$ for each wheel. In the step #3, the estimated vehicle body speed $WREF_i$ is

calculated as shown in Fig. 4.

In a step #41 in Fig. 4, a maximum rising speed (+) $\Delta WEREF_i$ is set. The maximum rising speed (+) $\Delta WEREF_i$ indicates the maximum allowable acceleration of a vehicle and shows a maximum allowable variation quantity of a difference between the estimated vehicle body speed $WREF_i$ at a control cycle at this time and the estimated vehicle body speed $WREF_i$ at the control cycle at a next time when the vehicle is being accelerated. In the first embodiment, the maximum rising speed (+) $\Delta WEREF_i$ is set to 2g (g is gravity acceleration).

In a step #42, a maximum descent speed (-) $\Delta WEREF_i$ is set. The maximum descent speed (-) $\Delta WEREF_i$ indicates the maximum allowable speed reduction of the vehicle, and shows a maximum allowable variation quantity of a difference between the estimated vehicle body speed $WREF_i$ in a control cycle at this time and the estimated vehicle body speed $WREF_i$ in the control cycle at a next time when the vehicle is being reduced in speed.

In the first embodiment, the maximum descent speed (-) $\Delta WREF_i$ is set to a value corresponding to a road surface $\mu$. Namely, when the vehicle is running on a high $\mu$ road surface like an asphalt road, the maximum descent speed (-)$\Delta WREF_i$ is a relatively large value. When the vehicle is running on a low $\mu$ road surface like a snow-covered road, an ice-covered road or the like, the maximum descent speed (-) $WREF_i$ is set to relatively small value.

In the first embodiment, as the maximum descent speed (-) $\Delta WREF_i$ is set in accordance with the road surface $\mu$, a pedal stroke quantity STR to be detected by the above described pedal stroke quantity detecting means S is used. On the high $\mu$ road surface, a lock symptom is detected in a location where the stepping quantity of the brake pedal 14 is great, and the wheel cylinder fluid pressure is relatively high. On the low $\mu$ road surface, the lock symptom is detected even in a location where the stepping quantity of the brake pedal 14 is small and the wheel cylinder fluid pressure is relatively low. A supposition can be used that the vehicle is on a high $\mu$ road surface in a location where the pedal stroke quantity STR is great, and the vehicle is on a low $\mu$ road surface when the pedal stroke quantity STRE is small.

Concretely in the first embodiment, the maximum descent speed (-) $\Delta WREF_i$ is set by the following equation (1).

$$(-) \Delta WREF_i$$

$$= -C_1 \cdot g - \{MAX (STR, STRE_0 \text{ through } STRE_3) / C_2\} \times C_3 \cdot g \text{ (Min. } C_4) \tag{1}$$

The STR is a pedal stroke quantity in each control cycle and the $STRE_0$ through $STRE_3$ are a pedal stroke quantity at the start time of the skid cycle stored, retained by each pedal stroke quantity storing means $STRM_0$ through $STRM_3$. Reference character MAX means a greater value between a pedal stroke quantity in each control cycle and the pedal stroke quantity at the starting time of the above described skid cycle. Reference character Min means that the (-) $\Delta WREF_i$ is set in $C_4$ when the maximum descent speed (-) $\Delta WREF_i$ calculated from the equation (1) has exceeded $C_4$ below. Reference characters $C_1$, $C_2$, $C_3$, $C_4$ are constants to be set in accordance with the brake characteristics. In the first embodiment, $C_1 = 0.3$, $C_2 = 80$, $C_3 = 0.9$, $C_4 = -1.2g$.

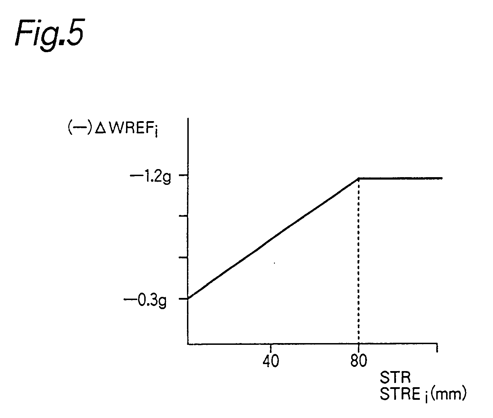

Fig. 5 shows the relation among the maximum descent speed (-) $\Delta WREF_i$ and the pedal stroke quantity STR, $STRE_i$ when $C_1$, $C_2$, $C_3$, $C_4$ have been set to the above described value. As shown in Fig. 5, in the first embodiment, the value of maximum descent speed (-) $\Delta WREF_i$ is set in proportion to the pedal stroke quantities STR, $STRE_i$. When the pedal stroke quantity STR or $STRE_i$ exceeds 80 mm, the (-) $\Delta WREF_i$ is set in -1.2g.

The relation among the above described maximum descent speed (-) $\Delta WREF_i$ and the pedal stroke quantity STR, $STRE_i$ is not restricted to those of Fig. 5, but has only to increase in the maximum descent speed (-) $\Delta WREF_i$ in accordance with the increase of the pedal stroke quantities ST, $STRE_i$.

In a step #43, a wheel speed $SPEED_i$ obtained by the control cycle at this time is compared with an estimated vehicle body speed obtained by the control cycle at the last time so as to estimate that the speed is being reduced when the wheel speed $SPEED_i$ by the control cycle at this time for moving it to a step #44, and to estimate that speed is being increased when the wheel speed $SPEED_i$ at the control cycle at this time is larger for moving it to a step #45.

At a step #44, a wheel speed $SPEED_i$ obtained at the control cycle at this time is compared with a value where the maximum descent speed (-) $\Delta WREF_i$ is added to the estimated vehicle body speed $WREF_i$ obtained at the control cycle at last time. When the wheel speed $SPEED_i$ of the control cycle at this time is greater, namely, when the wheel speed $SPEED_i$ obtained at the control cycle at this time is being changed with a given range from the estimated vehicle body speed $WREF_i$ at the last time, it is judged that the skid of the wheel is not caused. At a step #46, the $WREF_i$ obtained at the control cycle at this time is set to a speed equal to the wheel speed $SPEED_i$. At a step #44, when the wheel speed $SPEED_i$ obtained at the control cycle at this time is smaller than a value where a maximum descent speed (-) $\Delta WREF_i$ has been added to the estimated vehicle body speed $WREF_i$, namely, when the wheel speed $SPEED_i$ obtained at the control cycle at this time has exceeded the given range from the estimated vehicle body speed $WREF_i$

at the last time and has changed, the estimated vehicle body speed $WREF_i$ obtained at the control cycle at this time is set to a value where the maximum speed (-) $\Delta WREF_i$ has been added to the estimated vehicle body speed $WREF_i$ at the last time.

At a step #45, a wheel speed $SPEED_i$ obtained at the control cycle at this time is compared with a value where the maximum ascent speed (+) $\Delta WREF_i$ is added to the estimated vehicle body speed $WREF_i$ obtained at the control cycle at last time. When the wheel speed $SPEED_i$ of the control cycle at this time is not greater, namely, when the wheel speed $SPEED_i$ obtained at the control cycle at this time is being changed within a given range from the estimated vehicle body speed $WREF_i$ at last time, it is judged that a skid of the wheel is not caused. At a step #48, the $WREF_i$ obtained at the control cycle at this time is set to a speed equal to the wheel speed $SPEED_i$. At a step #45, when the wheel speed $SPEED_i$ obtained by the control cycle at this time is greater than a value where a maximum ascent speed (+) $\Delta WREF_i$ has been added to the estimated vehicle body speed $WREF_i$, namely, when the wheel speed $SPEED_i$ obtained at the control cycle at this time has exceeded the given range from the estimated vehicle body speed $WREF_i$ at the last time and has changed, the estimated vehicle body speed $WREF_i$ obtained at the control cycle at this time is set to a value where the maximum ascent speed (+) $\Delta WREF_i$ has been added to the estimated vehicle body speed $WREF_i$ at the last time.

At a step #50, a maximum estimated vehicle body speed WREFH which is a maximum value of the estimated vehicle body speed $WREF_0$ through $WREF_3$ in each wheel position is obtained.

At a step #4 in Fig. 3, lock symptom detecting means $L_0$ through $L_3$ detect the presence of the lock symptom for each wheel.

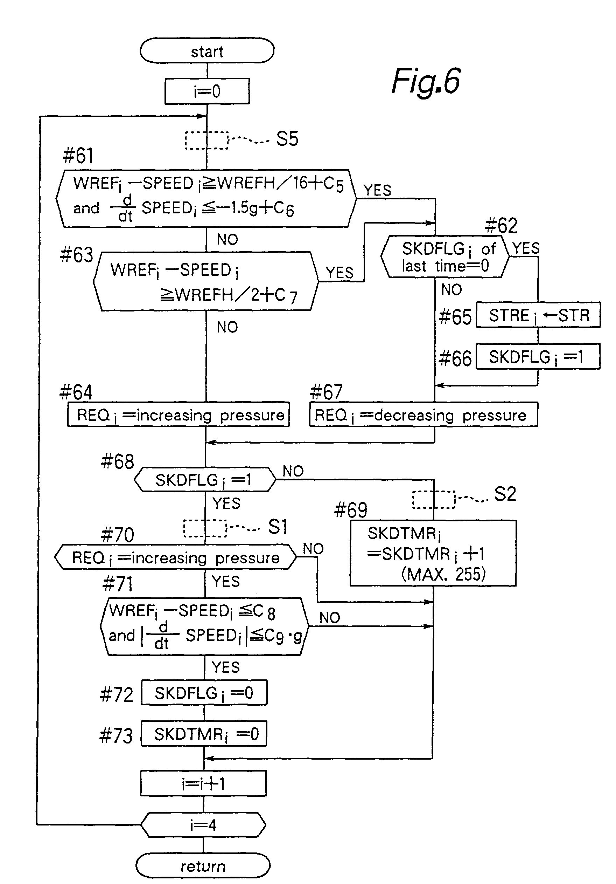

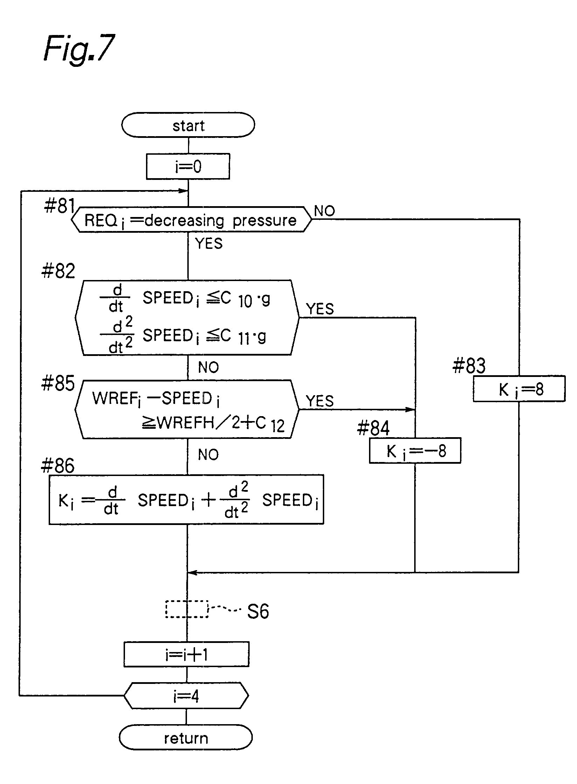

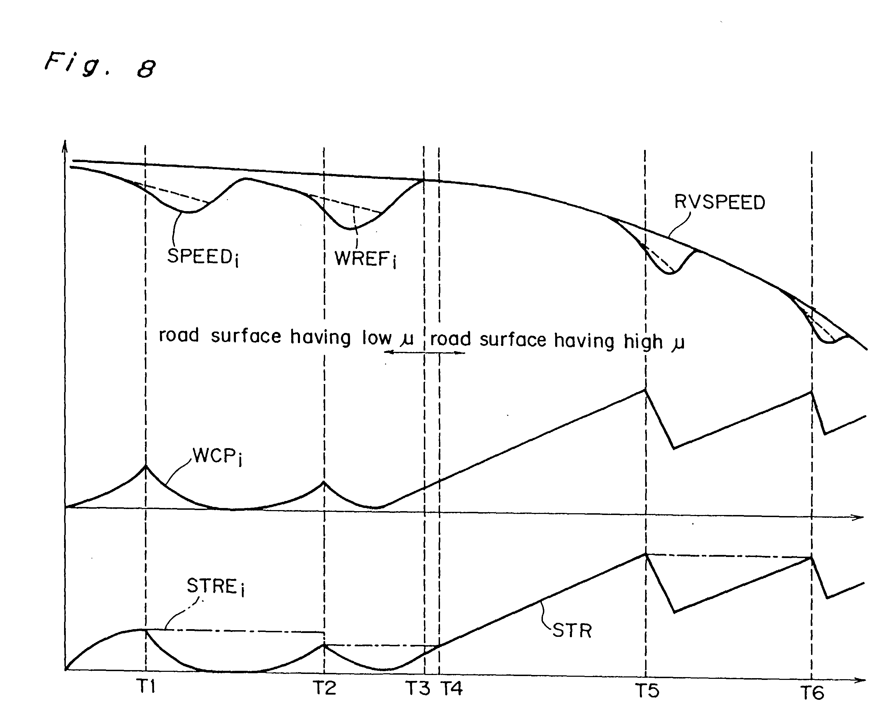

At a step #4, a processing shown in Fig. 6 will be concretely effected.

At a step #61 in Fig. 6, it is checked whether or not the following equation (2) is established. When it is established, it is estimated that the lock symptom exists so as to move the step to a step #62. When the equation is not established, the step is moved to a step #63.

$$WREF_i - SPEED_i \geq WREFH / 16 + C_5 \text{ and}$$

$$d/dt (SPEED_i) \leq -1.5g + C_6 \tag{2}$$

wherein $C_5$, $C_6$ are threshold values set in accordance with the brake characteristic. In the first embodiment, $C_5 = 2$, $C_6 = 2$.

At a step #63, it is checked whether or not the following equation (3) is established. When it is established, it is estimated that the lock symptom exists so as to move the step to a step #62. When it is not established, the step moves to a step #64.

$$WREF_i - SPEED_i \geq (WREFH / 2) + C_7 \tag{3}$$

wherein $C_7$ is a value set in accordance with brake characteristics, $C_7 = 5$ is set in the present embodiment.

At a step #62, a skid flag $SKDFLG_i$ at the control cycle at the last time is checked. The skid flag $SKDFLG_i$ shows a flag showing whether or not the wheel is in a skid condition, a skid cycle, namely, a period of time required for the wheel speed $SPEED_i$ and the estimated vehicle body speed $WREF_i$ recover the synchronized condition again from the lock symptom detecting edge is set to "1", a period during which the synchronized condition is established is set to "0". At a step #62, when the skid flag $SKDFLG_i$ is "0", the synchronization condition is established in the control cycle at the last time. As the lock symptom is detected at the control cycle at this time, it is equivalent to a lock symptom detecting edge, namely, the skid cycle starting time. In this case, the step moves to a step #65 so as to store the pedal stroke quantity STR at the control cycle at this time as the $STRE_i$ in the pedal stroke quantity storing means $STRM_i$. At the step #66, the skid flag $SKDFLG_i$ is set to "1", and thereafter, at a step #67, a control request $REQ_i$ is set in "pressure reduction".

At the above described step #62, if the skid flag $SKDFLG_i$ is "1" at the last time, the wheel is in a skid condition and is not in the lock symptom detecting edge so that the step directly moves to the above described step #67.

When the equation (3) is not established at the above described step #63, the lock symptom is not detected. Therefore, at the step #64, the control request $REQ_i$ is set in "pressure increase".

At a step #68, the skid flag $SKDFLG_i$ in the control cycle at this time is checked. In a case of "0", namely, when a condition is not a skid condition, "1" is added to the skid timer $SKDTMR_i$ at a step #69. The skid timer $SKDTMR_i$ which is a timer for counting a period of time when the skid flag $SKDFLG_i$ is "0" about each wheel, has a maximum value set at 255 in the present embodiment.

When the skid flag $SKDFLG_i$ is "1" at a step #68, it is checked at a step #70 if the control request $REQ_i$ is "pressure increase". When it is the "pressure increase", the step moves to a #71. At the step #71, it is checked whether or not the synchronization condition is being recovered.

$$WREF_i - SPEED_i \leq C_8$$

$$and \; |d/dt \, (SPEED_i)| \leq C_9 \cdot g \qquad (4)$$

wherein $C_8$, $C_9$ are constants to be set in accordance with the brake characteristic of the vehicle. In the present embodiment, $C_8 = 2$, $C_9 = 1$.

At a step #71, as the synchronization condition is being recovered when the above described (4) is established, the step moves to a step #72 so as to set the skid flag $SKDFLG_i$ to "0". Also, at a step #73, the skid timer $SKDTMR_i$ is cleared to "0".

At a step #5 in Fig. 3, a pressure increasing or reducing signal $K_i$ is set in accordance with the absence and presence of the detection of a wheel speed $SPEED_i$ calculated at the step #2, an estimated vehicle body speed $WREF_i$ set at the step #3, a lock symptom detected at the step #4.

The pressure increasing or reducing signal $K_i$ is a signal which instructs the switching operation of the output valves 4A through 4D of the actuator $ACT_0$ through $ACT_3$.

The pressure increasing or reducing signal $K_i$ is set between -8 and 7 so as to regulate the combination of a period of time (pressure reduction time $\Delta tdump$) when the fluid pressure of the wheel cylinders 2A through 2D is reduced by the switching operation of the outlet valves 4A through 4D and a period of time (pressure adding time $\Delta tapply$) when the fluid pressure of the wheel cylinders 2A through 2D is applied. In the first embodiment, the values of the pressure applying time $\Delta tapply$ with respect to the pressure increasing or reducing signal $K_i$, of the pressure reducing time $\Delta tdump$ are stipulated in a following Table 1.

When, for example, a pressure increasing or reducing signal $K_0$ with respect to a left front wheel (i = 0) is set to 0, the pressure increasing or reducing signal $K_0$ instructs to open, close the outlet valves 4A so that the adding pressure time $\Delta tapply_0$ may become 24 msec with respect to the actuator $ACT_0$, and the subtracting pressure time $\Delta tdump_0$ may become 8 msec.

Table 1

| K | $\Delta t$ dump (msec) | $\Delta t$ apply (msec) |
| --- | --- | --- |
| -8 | 225 | 0 |
| -7 | 32 | 6 |
| -6 | 24 | 6 |
| -5 | 24 | 8 |
| -4 | 12 | 8 |
| -3 | 8 | 8 |
| -2 | 8 | 12 |
| -1 | 8 | 16 |
| 0 | 8 | 24 |
| 1 | 8 | 32 |
| 2 | 8 | 40 |
| 3 | 8 | 50 |
| 4 | 8 | 60 |
| 5 | 8 | 70 |
| 6 | 8 | 100 |
| 7 | 8 | 100 |
| 8 | 0 | 255 |

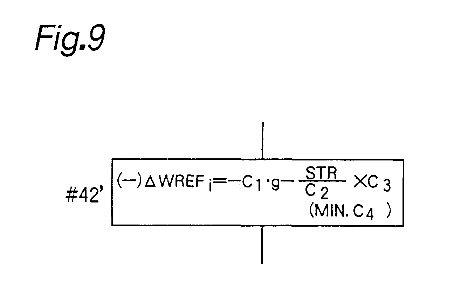

At the above described step #5, a processing operation shown in Fig. 7 will be concretely effected.

At a step #81 in Fig. 7, the control request $REQ_i$ is checked. In a case of the "pressure reduction", the step moves to a step #82. In a case of "pressure increase", the step moves to a step #83. At a step #83, the pressure increasing or reducing signal $K_i$ is set at "8".

At a step #82, it is checked whether or not an abrupt skid is progressing by the following equation (5).

$$d/dt\ (\text{SPEED}_i) \leq C_{10} \cdot g \text{ or}$$

$$d^2/dt^2\ (\text{SPEED}_i) \leq C_{11} \cdot g \tag{5}$$

wherein $C_{10}$ and $C_{11}$ are constants to be set in accordance with brake characteristics and in the present embodiment, $C_{10}$ = -3, $C_{11}$ = -1. In the equation (5), a unit of $d^2/dt^2$ (SPEED$_i$) is (g/control cycle).

When the equation (5) is established at a step #82, it is estimated that an abrupt skid is progressing and thus, the step moves to a step #84. At a step #84, the pressure increasing or reducing signal $K_i$ is set to - 8 . As described in above described Table 1, the pressure reducing time $\Delta$tdump is 255, the pressure adding time $\Delta$taplly is 0 when the pressure increasing or reducing signal $K_i$ is -8, thus resulting in whole pressure reduction. When the equation (5) is not established at a step #82, the step moves to a step #85.

At a step #85, it is checked whether or not the width of the skid is large by the following equation (6).

$$\text{WREF}_i - \text{SPEED}_i \geq (\text{WREFH }/2) + C_{12} \tag{6}$$

The $C_{12}$ in the above described equation (6) is a constant to be set in accordance with brake characteristics and $C_{12}$ = 5 in the present embodiment.

When the equation (6) is established at a step #85, it is estimated that the width of the skid is considerably great, and the step moves to the above described step #84. When the equation is not established, the step moves to a step #86.

At a step #86, a pressure increasing or reducing signal $K_i$ is set in accordance with the following equation (7).

$$K_i = d/dt\ (\text{SPEED}_i) + d^2/dt^2\ (\text{SPEED}_i) \tag{7}$$

At a step #6 in Fig. 3, the pressure increasing or reducing speed signal $K_i$ set at the above described step #5 is outputted to actuators $\text{ACT}_0$ through $\text{ACT}_3$.

Fig. 8 indicates the relation of a time lapse with respect to an actual vehicle body speed (actual vehicle body speed RVSPEED) in a case where a decelerating vehicle is running towards a high $\mu$ road surface from a low $\mu$ road surface, an estimated vehicle body speed $\text{WREF}_i$ for one wheel, a wheel speed RVSPEED), a pedal stroke quantity STR and a wheel cylinder fluid pressure $\text{WCP}_i$.

When a first lock symptom is detected at a time T1 so as to start the skid cycle, a pressure increasing or reducing signal $K_i$ for instructing the pressure reduction of the wheel cylinder fluid pressure $\text{WCP}_i$ is outputted with respect to the actuator $\text{ACT}_i$ so as to start the pressure reduction by the wheel cylinder fluid pressure $\text{WCP}_i$.

A pedal stroke quantity STR at the time T1 is stored, and is retained as a pedal stroke quantity $\text{STRE}_i$ at the starting time of the skid cycle in the pedal stroke storing means $\text{STRM}_i$.

As the pedal stroke quantity $\text{STRE}_i$ stored in the pedal stroke storing means $\text{STRM}_i$ is greater than the pedal stroke quantity STR detected at each control cycle to a time T2 from the time T1, the maximum descent speed (-) $\text{WREF}_i$ is set in accordance with the pedal stroke quantity $\text{STREE}_i$ and the estimated vehicle body speed $\text{WREF}_i$ is calculated in accordance with the set value.

When a second lock symptom is detected and the skid cycle is started again at the time T2, the pedal stroke quantity STR at the time T2 is newly stored, and is retained in the pedal stroke quantity storing means $\text{STRM}_i$. Thereafter, the maximum descent speed (-) $\Delta\text{WREF}_i$ is set in accordance with the newly stored pedal stroke quantity $\text{STRE}_i$.

At a time T3, the vehicle moves from the low $\mu$ road surface onto the high $\mu$ road surface. When the vehicle moves onto the high $\mu$ road surface, the lock symptom is detected no longer even in the wheel cylinder fluid pressure WCP where the lock symptom is caused on the above described low $\mu$ road surface and the pedal stroke quantity STR is gradually increased. At a time T4, it becomes larger than the pedal stroke quantity STRE stored in the pedal stroke quantity storing means $\text{STRM}_i$. Therefore, at a time T4 and its subsequent, the maximum descent speed (-) $\Delta\text{WREF}_i$ at the step #42 in the above described Fig. 4 is set in accordance with the pedal stroke quantity STR at each control cycle and the estimated vehicle body speed $\text{WREF}_i$ is calculated from the set value. Accordingly, at a time T4 and subsequently, the ratio of the speed reduction of the estimated vehicle body speed $\text{WREF}_i$ becomes greater.

At a time T5, a third lock symptom is detected. As a vehicle runs on a high $\mu$ road surface as described hereinabove at a time T5, the wheel cylinder fluid pressure is relatively high and the pedal stroke quantity STR becomes greater than the pedal stroke quantity STR at the start of first and second skid cycles. The maximum descent speed (-) $\Delta\text{WREF}_i$ is set in accordance with the relatively large pedal stroke quantity $\text{STRE}_i$ for a period of time required for the lock symptom to be detected again from the time T5 to the time T6 and the estimated vehicle body speed $WREFH_i$ is calculated in accordance with it.

In the first embodiment as described hereinabove, considering the pedal stroke quantity STR of the brake pedal 14 shows a value corresponding to the road surface $\mu$, the maximum descent speed (-) $\Delta WREFi$ of the estimated vehicle body speed $WREFi$ is set in accordance with the pedal stroke quantity STR. Therefore, on the high $\mu$ road surface, the descent speed (-) $\Delta WREF_i$ of the estimated vehicle body speed $WREF_i$ is set greater on the high $\mu$ road surface and it can be set smaller on the low road surface. The estimated vehicle body speed $WREF_i$ can be calculated correctly considering the difference of the friction coefficient of the road surface, and the anti-lock brake controlling operation conformed to the road surface condition can be effected.

In the above described first embodiment, the maximum descent speed (-) $\Delta WREF_i$ is set with the use of the larger one of the pedal stroke quantity STR at each control cycle and the pedal stroke quantity $STRE_0$ through $STRE_3$ stored in the pedal stroke quantity storing means $STRM_i$ as shown in the equation (1). The maximum descent speed (-) $\Delta WREF_i$ may be normally calculated from the pedal stroke quantity STR at each control cycle without comparison between the STR and the $STRE_i$.

Namely, the maximum descent speed - $\Delta WREFi$ may be calculated by the following equation (8) with the step #42 of Fig. 4 being replaced by a step #42' shown in Fig. 9.

$$(-) \Delta WREF_i = -C_1 \cdot g - (STR_i / C_2) \times C_3 \cdot g$$

$$(Min. \ C_4) \tag{8}$$

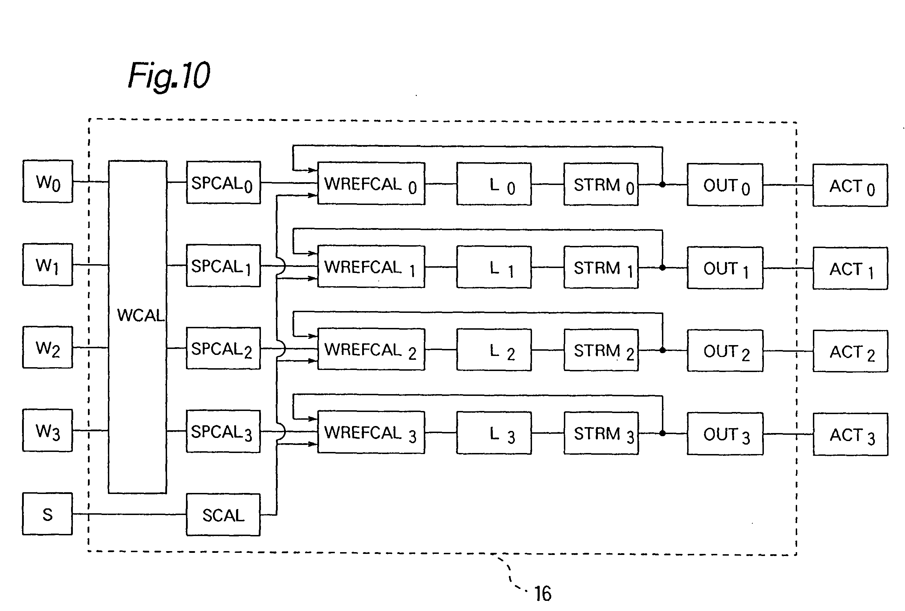

Fig. 10 indicates a second embodiment of the present invention.

In the second embodiment, when a road surface friction coefficient shows a large difference on the right side and the left side of the vehicle (split road surface), a controlling operation (split controlling operation) is effected to set so that the estimated vehicle body speed $WREF_i$ on the high $\mu$ road surface side may become greater than the estimated vehicle body speed $WREF_i$ on the low $\mu$ road surface side.

In Fig. 10, $SPCAL_0$ through $SPCAL_3$ are a split detecting means. The split detecting means $SPECAL_0$ through $SPCAL_3$ calculate a split index indicating an extent of difference of the road surface friction coefficients between the high $\mu$ road surface side and the low $\mu$ road surface side so as to output the split index SPLIT to the estimated vehicle body speed calculating means $WREF_i$.

In a second embodiment, lock symptom detecting means $L_0$, $L_1$ corresponding to right and left front wheels which are driving wheels are provided with split timers $SPLTMR_0$, $SPLTMR_1$ for measuring a period of time when the skid condition of the right and left front wheels continue, namely, for a period of time when the above described skid flags $SKDFLG_0$, $SKDFLG_1$ continue in the "1" condition.

The other construction in the second embodiment is the same as that in the above described first embodiment.

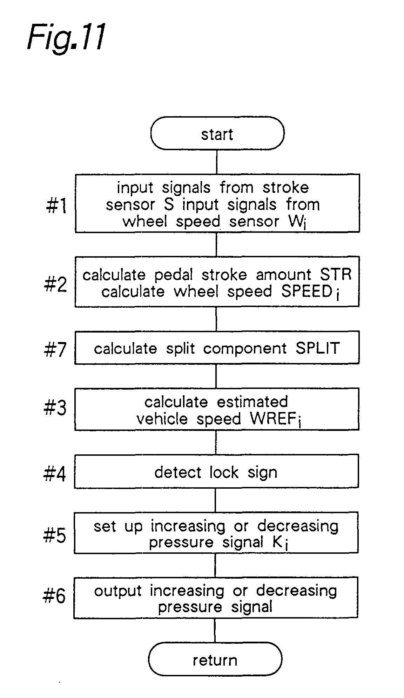

The operation of the second embodiment shown in Fig. 11 will be described hereinafter.

At the step #1, and the step #2 in Fig. 11, signals from wheel the speed detecting means $W_0$ through $W_3$, the pedal stroke quantity detecting means S are inputted as in the first embodiment so as to calculate the wheel speed $SPEED_i$ and the pedal stroke quantity STR.

A split index SPLIT is calculated at a step #7.

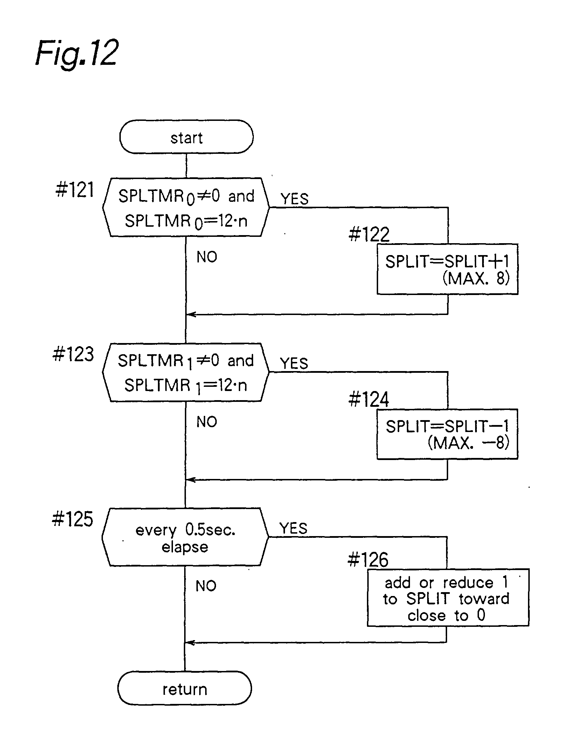

At the step #7, a processing operation shown in Fig. 12 is effected in detail.

At a step #121 in Fig. 12, the above described split timer $SPLTMR_0$ corresponding to the left front wheel (i = 0) checks whether or not it is a multiple of 12. Namely, when $SPLTMR_0 = 0$, and $SPLTMR_0 = 12 \cdot n$ (n is a natural number) are established, "1" is added to the split index SPLIT at the step #122. A maximum value of the split index SPLIT is 8. As the control cycle is 8 msec as described hereinabove, "1" is added to the split index SPLIT every time a period of time measured by the split timer $SPLITMR_0$ of the left front wheel passes by about 100 msec.

At a step #123, when $SPLTMR_1 = 0$, and $SPLTMR_1 = 12 \cdot n$ are established about the split timer $SPLTMR_1$ corresponding to the right front wheel (i = 1), "1" is reduced in the split index SPLIT at the step #124. A minimum value of the split index SPLIT is -8.

At a step #125 and a step #126, "1" is added or subtracted as the split index SPLIT is brought near to 0 for each of 0.5 sec.

The split index SPLIT set as described hereinabove changes during $-8 \leq SPLIT \leq 8$, indicates that the right side is a low $\mu$ road surface as it is closer to "-8" and the left side is a low $\mu$ road surface as it is closer to "8".

At the step #3 in Fig. 11, the estimated vehicle body speed $WREF_i$ is calculated.

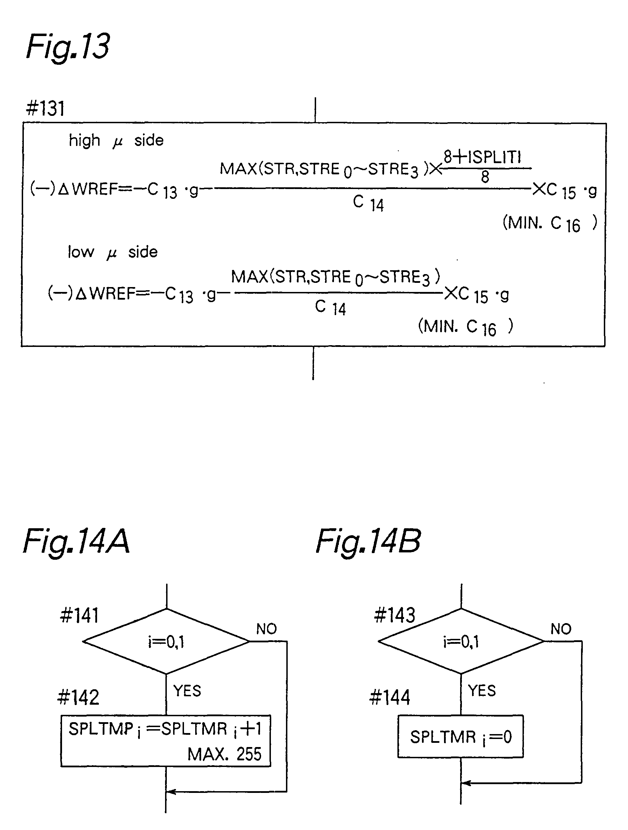

In the second embodiment, the step in above described Fig. 4 is replaced by a step #131 shown in Fig. 13.

Namely, in the second embodiment, the maximum descent speed (-) $\Delta WREF_i$ is set by the following equation (10) on the high $\mu$ road surface side of the wheel (i = 0, 2) on the left side of the wheel and the wheel (i = 1, 3) on the right side. On the low $\mu$ road surface side, the maximum descent speed (-) $\Delta WREF_i$ is set by the following equation (11).

$$(-) \Delta WREF_i$$

$$= - C_{13} \cdot g - \{MAX\ (STR,\ STRE_0\ through\ STRE_3) \times$$

$$(8 + |SPLIT|) / 8 \} / C_{14} \times C_{15} \bullet g\ (MIN.\ C_{16}) \tag{10}$$

$$(-) \Delta WREF_i$$

$$= - C_{13} \cdot g - \{MAX\ (STR,\ STRE_0\ through\ STRE_3)\} / C_{14} \times C_{15} \bullet g\ (MIN.\ C_{16}) \tag{11}$$

In the above described equation (10), equation (11), reference characters $C_{13}$, $C_{14}$, $C_{15}$, $C_{16}$ are constants fixed in accordance with the brake characteristics. In the second embodiment, $C_{13} = 0.3$, $C_{14} = 80$, $C_{15} = 0.9$, $C_{16} = -1.2$ g are set.

The estimated vehicle body speed $WREF_i$ is calculated as in the first embodiment about the step #43 through the step #49 in Fig. 4.

Namely, in the second embodiment, when the value of $\mu$ of the road surface on which a vehicle is running is largely different on the right and on the left, the maximum descent speed (-) $\Delta WREF_i$ on the high $\mu$ road surface side is set greater than on the low $\mu$ road surface side. In the second embodiment, the estimated vehicle body speed $WREF_i$ can be set properly in accordance with the road surface friction estimated by the pedal stroke quantity even in the split road surface.

At the step #4 in Fig. 11, the lock symptom is detected as in the first embodiment and also, the continuous time of the skid condition in the right and left front wheel (i = 0, 1) is measured by the split timer $SPLTMR_i$.

Namely, in the second embodiment, a processing operation shown in Fig. 14 (A) is inserted into a portion shown at S1 in the above described Fig. 6 and also, a processing operation shown in Fig. 14 (B) is inserted into a portion shown in S2 in Fig. 6. At the step #68 in Fig. 6, the step moves to a step #141 when the skid flag $SKDFLG_i$ indicates "1" showing the skid condition. At the step #141, i = 0, 1, namely, the wheel is a left front wheel or a right front wheel, "1" is added to the split timer $SPLTMR_i$ at a step #142. If the skid flag $SKDFLT_i$ is "0" at the step #68, the step moves to a step #143, the step timer $SPLTMR_i$ is cleared into "0" at the step #144 at i = 0, 1. In the present embodiment, the maximum value of the split timer $SPLTMR_i$ is set to 255.

At the step #5, and the step #6, a setting operation of the pressure increasing or reducing signal $K_i$ and an outputting operation of the pressure increasing or reducing signal $K_i$ to the actuators $ACT_0$ through $ACT_3$ of the pressure increasing or readucing signal $K_i$ are effected.

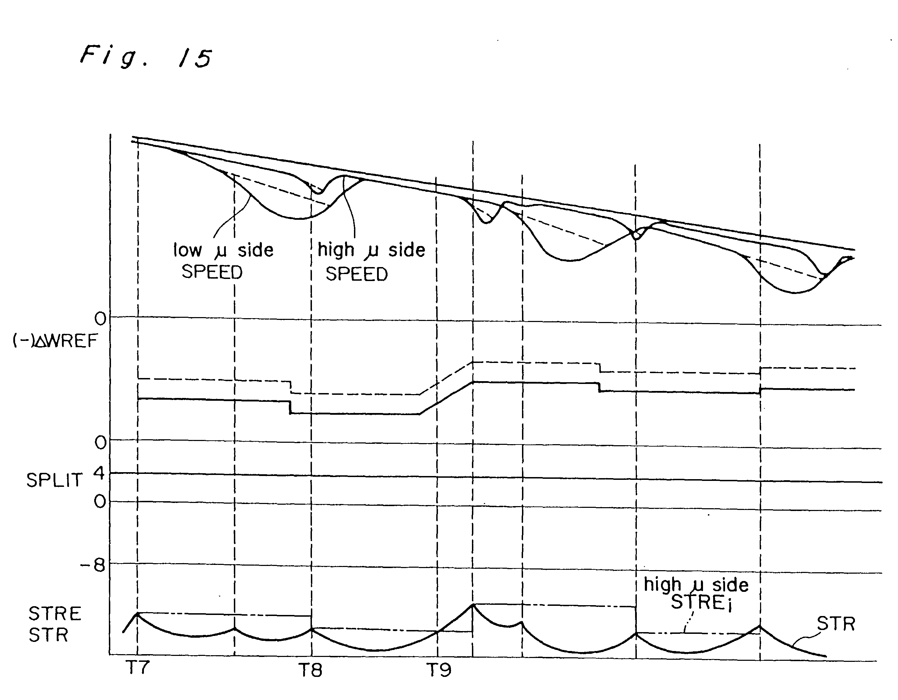

Fig. 15 shows "4" in the split index SPLIT, namely, an operation in the second embodiment on the split road surface where the left side of the vehicle is a low $\mu$ road surface and the right side is a high $\mu$ road surface.

When the lock symptom is detected at a time T7, the pedal stroke quantity STR at a time point is stored, and is retained as $STRE_i$ to a pedal stroke quantity storing means $STRM_i$.

As the pedal stroke quantity $STRE_i$ at the above described time T7 exceeds the pedal stroke quantity STR at each control cycle for a period of time from a time T7 to a time T8, the maximum descent speed (-) $WREF_i$ is calculated in accordance with the equations (10), (11) from the $STRE_i$ and the split index SPLIT. As clear from the equations (10), (11) at this time, the maximum descent speed (-) $\Delta WREF_i$ on the high $\mu$ road surface side is set larger than the low $\mu$ road surface side. In the second embodiment as described hereinabove, the detection of the lock symptom using the $WREF_i$ and the detection of the recovery of the synchronization condition can be effected with high accuracy, because the estimated vehicle body speed $WREF_i$ becomes a value corrected in accordance with the right and left road surfaces $\mu$.

When the lock symptom is detected again at the time T8, the pedal stroke quantity STR at this time T8 is stored, retained in the pedal stroke quantity storing means $STRM_i$.

For a period of time from a time T8 to a time T9, the pedal stroke quantity $STRE_i$ stored in the pedal stroke quantity storing means $STEM_i$ is greater than the pedal stroke quantity STR at each control cycle and the maximum descent speed (-$\Delta WREF_i$ is set in accordance with the pedal stroke quantity "$STRE_i$. When, at a time T9, the pedal stroke quantity STR exceeds the pedal stroke quantity at the above described time T8, the maximum descent speed -$\Delta WREF_i$ is set later in accordance with the pedal stroke quantity STR at each control cycle.

A third embodiment of the present invention will be described hereinafter.

In the third embodiment, the estimated vehicle body speed $WREF_i$ is adapted to be set correspondingly when the vehicle is turning on a corner.

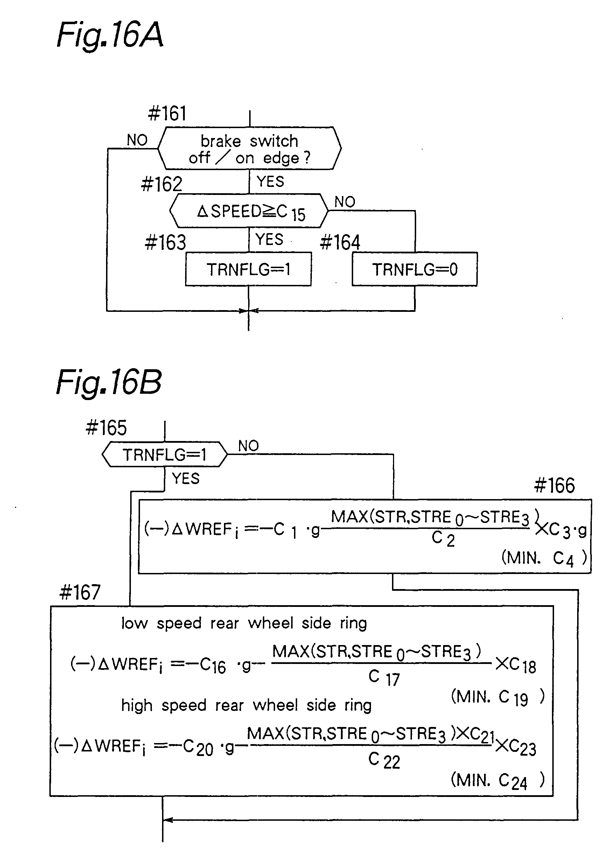

In the third embodiment, a brake switch (not shown) is provided. It outputs "ON" when a brake pedal 14 is stepped, and "OFF" when the brake pedal 14 is not stepped. A signal from the brake switch is adapted to be inputted to a signal processing portion 16. In the third embodiment, a processing operation shown in Fig. 16 (A) is inserted into a portion S3 and also, a processing operation of the step #42 is replaced by a processing operation shown in Fig. 16 (B). The other construction of the third embodiment is similar to that of the first embodiment.

In the third embodiment, the estimated vehicle body speed $WREF_i$ is calculated as described hereinabove.

At a step #161 of the above described Fig. 16 (A), it is checked whether or not the control cycle at this time is off / on edge where the brake switch is switched from the off to the on so as to move the step to a step #162 in the case of the on / off edge.

At the step #162, the $\Delta$SPEED is compared with a given value $C_{15}$ (km / h). The $\Delta$SPEED is an absolute value of the speed difference of the right and left rear wheels, and is defined by the following equation (12).

$$\Delta SPEED = |SPEED_2 - SPEED_3| \tag{12}$$

In the present embodiment, the above described given value $C_{15}$ is set to 2 km / h.

When the $\Delta$SPEED is greater than the given value $C_{15}$ at the above described step #162, it is judged that the vehicle is turning. At a step #163, the turning flag TRNFLG is set to "1". When the $\Delta$SPEED is smaller than the given value $C_{15}$ at a step #162, it is judged that the vehicle is not turning. The step moves to a step #164 so as to set the turning flag TRNFLG is set to "0".

The maximum ascent speed (+) WREF is set as shown at a step #41 in Fig. 4, and thereafter, the step moves to a step #165 of Fig. 16 (B).

At the step #165, the above described turning flag TRNFLG is checked. In the case of the "0", the maximum descent speed (-) $\Delta WREF_i$ is set by the equation (1) as in the first embodiment at the step #166.

When the turning flag TRNFLG is "1" at the above described step #165, it is estimated that the vehicle is turning and a braking operation is effected by a brake, and the step moves to a step # 167.

At a step #167, four wheels of a vehicle are divided into front and rear wheels on a right side (i = 0, 2) and front and rear wheels (i = 1, 3) on a left side. Of them, a maximum descent speed (-) $\Delta WREF_i$ of a wheel on the same side as a low speed rear wheel is regulated by the following equation (13) and a (-) $\Delta WREF_i$ of a wheel on the same side as that of a high speed rear wheel is regulated by the following equation (14).

$$(\text{-}) \Delta WREF_i$$

$$= \text{-}C_{16} \cdot g - \{MAX (STR, STRE_0 \text{ through } STRE_3) / C_{17}\} \times C_{18} \cdot g$$

$$(MIN. C_{19}) \tag{13}$$

$$(\text{-}) \Delta WREF_i$$

$$= \text{-} C_{20} \cdot g - \{MAX (STR, STRE_0 \text{ through } STRE_3) \times C_{21}/C_{22}\} \times C_{23} \cdot g$$

$$(MIN. C_{24}) \tag{14}$$

Of both the right and left sides of the above described vehicle, the low speed side corresponds to the inner side (inner wheel side) of a turning radius of the vehicle and the high speed side corresponds to the outer side (outer wheel side) of the turning radius of the vehicle.

Of the above described equations (13), (14), reference characters $C_{16}$ through $C_{24}$ are constants to be determined in accordance with the brake characteristic of the vehicle. In the present embodiment, $C_{16}$, $C_{20}$ = 0.3, $C_{17}$, $C_{22}$ = 80, $C_{18}$, $C_{23}$ = 0.9, $C_{19}$, $C_{24}$ = -1.2 g, $C_{21}$ = 1.5 are set. In the third embodiment as described hereinabove, the pedal stroke quantity STR is made 1.5 times on the high speed rear wheel side so as to calculate the maximum descent speed (-) $WREF_i$.

In the third embodiment, as the maximum descent speed of the estimated vehicle body speed $WREF_i$ is made different on the high speed side and the low speed side of the turning vehicle, an ideal anti-lock controlling operation can be effected even with respect to the turning vehicle.

At the above described step #167, the maximum descent speed $(-)\Delta WREF_i$ of a wheel on the same side as the high speed rear wheel may be set in accordance with the wheel reduced speed Vg. For example, the maximum descent speed $(-) \Delta WREF_i$ of the wheel on the same side as the high speed rear wheel may be set by the following equation (15)

$$(-) \Delta WREF_i = -C_{25} \cdot g - \{(1 + Vg) \times STR / C_{26} \} \times C_{27} . g \ (MIN. \ C_{28}) \qquad (15)$$

In the equation (15), $C_{25}$, $C_{26}$, $C_{27}$, $C_{28}$ are constants determined in accordance with the brake characteristics. For example, $C_{25} = 0.3$, $C_{26} = 80$, $C_{27} = 0.9$, $C_{28} = -1.2$ are set. In the equation (15), the unit of g is a gravity acceleration.

A fourth embodiment of the present invention will be described hereinafter.

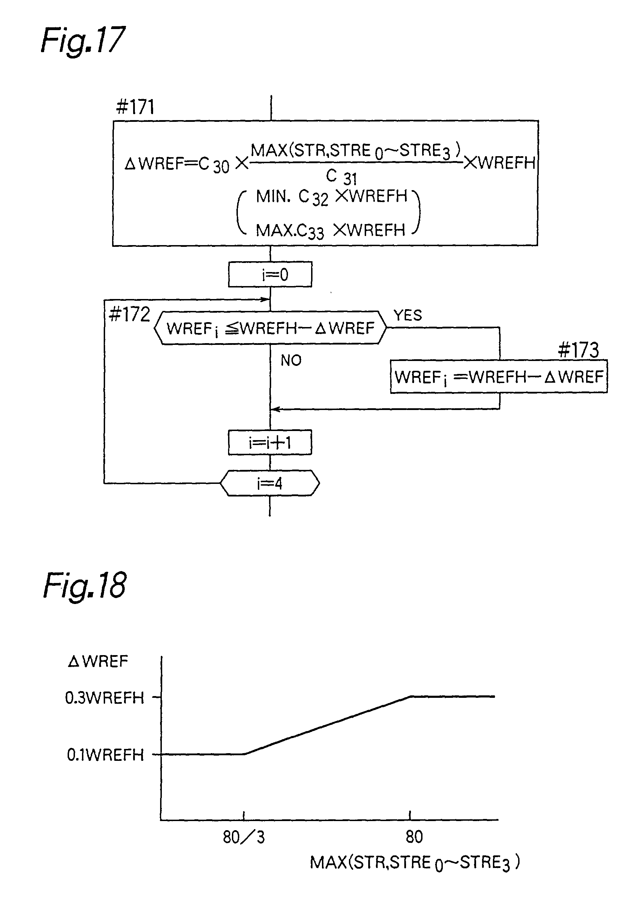

In the fourth embodiment, a processing operation shown in Fig. 17 is effected in a portion S4 in Fig. 4. The other construction and function will be the same as those of the first embodiment.

In the fourth embodiment, estimated vehicle body speed $WREF_0$ through $WREF_3$ corresponding to each wheel, and the maximum estimated vehicle body speed WREFH are calculated at steps #41 through #50 in Fig. 4 are calculated, and thereafter, the step moves to a step #171 in Fig. 17.

At a step #171, a maximum deviation quantity $\Delta WREFH$ is obtained. The maximum deviation quantity $\Delta WREF$ stipulates a maximum value of the deviation between the above described maximum estimated vehicle body speed WREF and the estimated vehicle body speed $WREF_i$ corresponding to each wheel, and is concretely calculated by the following equation (16).

$$\Delta WREF = C_{30} \times MAX \ (STR, STRE_0 \ through \ STREF_3)$$

$$/ \ C_{31} \times WREFH$$

$$(MIN. \ C_{32} \bullet WREFH)$$

$$(MAX. \ C_{33} \bullet WREFH) \qquad (16)$$

In the above described equation (16), $C_{30}$ through $C_{33}$ are constants to be set in accordance with brake characteristics. In the fourth embodiment, $C_{30} = 0.3$, $C_{31} = 80$, $C_{32} = 0.1$, $C_{33} = 0.3$.

Fig. 18 indicates the relation between the maximum deviation equation $\Delta WREF$ and the pedal stroke quantity in a case where $C_{30}$ through $C_{33}$ are set to above described values.

Fig. 18 indicates the relation between the maximum deviation equation $\Delta WREF$ and the pedal stroke quantity in a case where the constants are $C_{30}$ through $C_{33}$.

When a larger one of the pedal stroke quantity STR at each control cycle and the pedal stroke quantity $STRE_0$ through $STRE_3$ at the starting time of the skid cycle, namely, a MAX $(STR, STRE_0$ through $STRE_3)$ are lower than 80 / 3 mm in the fourth embodiment as shown in Fig. 18, the maximum deviation quantity $\Delta WREF$ is set to $0.1 \bullet WREFH$, the maximum deviation equation $\Delta WREF$ is set in proportion to the pedal stroke quantity while the MAX. $(STR, STRE_0$ through $STRE_3)$ is between 80 / 3 mm and 80 mm. Further, when the MAX $(STR, STRE_0$ through $STRE_3)$ exceeds 80 mm, the maximum deviation equation $\Delta WREF$ is set to $0.3 \bullet WREFH$.

At a step #172, the estimated vehicle body speed $WREF_i$ of each wheel is compared with what the maximum deviation quantity $\Delta WREF$ is subtracted from the maximum value WREFH of the estimated vehicle body speed (WREFH - $\Delta WREF$). The estimated vehicle body speed $WREF_i$ is smaller, the WREFH-$\Delta WREF$ is set to the estimated vehicle body speed $WREF_i$ at a step #173.

In the fourth embodiment, the maximum deviation quantity $\Delta WREF$ is set in accordance with the pedal stroke quantity as described hereinabove, and a value obtained by subtraction of the maximum deviation quantity $\Delta WREF$ from the maximum vehicle body speed WREFH is provided as a bottom value of the estimated vehicle body speed $WREF_i$.

In the fourth embodiment, when there is a great difference between the maximum estimated vehicle body speed and the estimated vehicle body speed at the position of other wheel, it is adapted to be corrected. Thus, the anti-lock control operation can be effected with high accuracy even when the vehicle body speed is largely dispersed.

In the equations (10), (11), (13), (14), (16) from the second embodiment to the fourth embodiment, MAX $(STR, STRE_0$ through $STRE_3)$ is permuted to STR, and the pedal stroke quantity STR at each control cycle may be used as it is without comparison between the pedal stroke quantity at the lock symptom detection edge and the pedal stroke quantity STR in each control cycle.

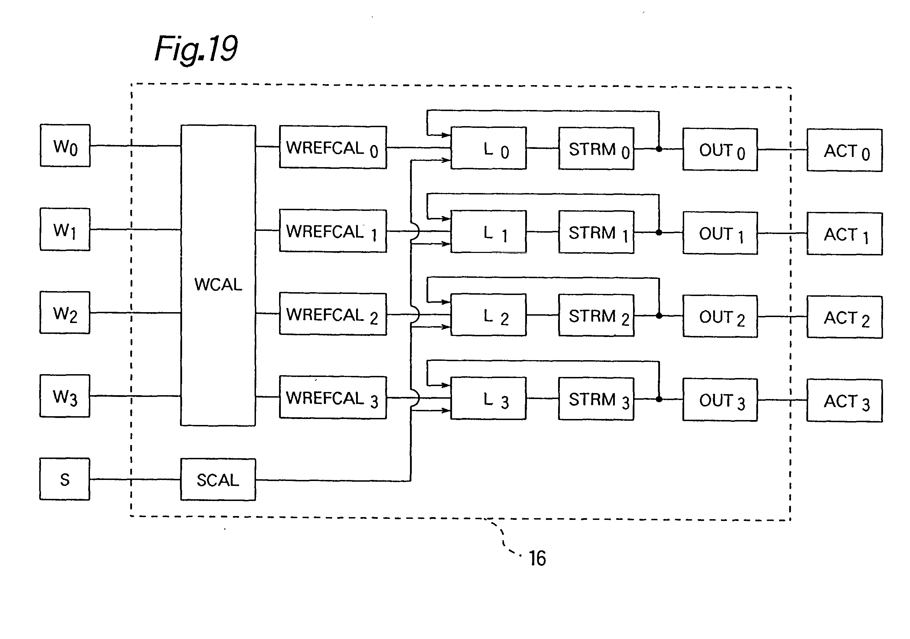

A fifth embodiment of the present invention shown in Fig. 19 will be described hereinafter.

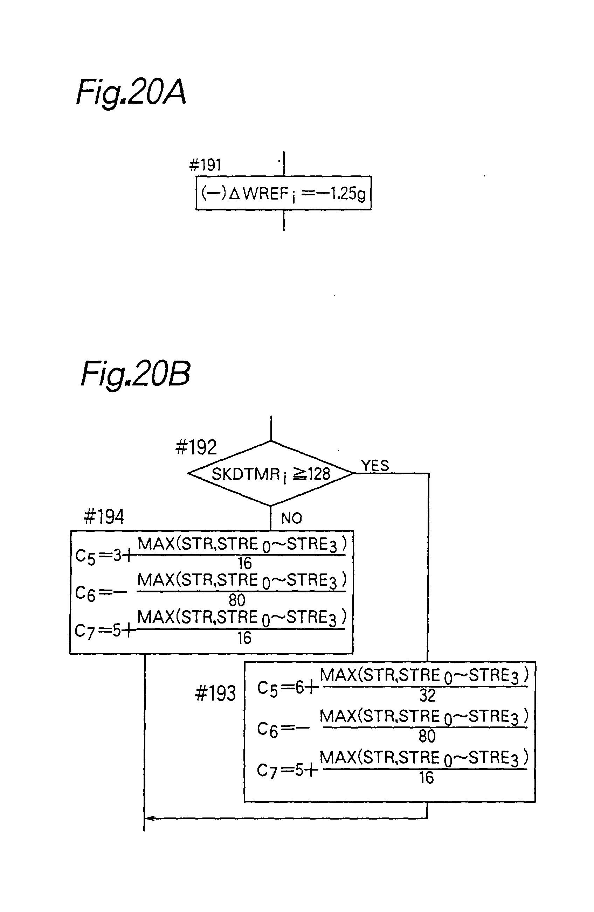

In the fifth embodiment, a signal from the above described pedal stroke quantity detecting means S is adapted to be outputted to each lock symptom detecting means $L_0$ through $L_3$. The fifth embodiment is adapted to be made similar in construction to the first embodiment except in that a step #42 in Fig. 4 showing the setting of the estimated vehicle body speed $WREF_i$ is replaced by the step #191 shown in Fig. 20 (A), and also, that a processing operation shown in Fig. 20 (B) is inserted into a portion S5 of Fig. 6 showing the detection of the lock symptom.

In the fifth embodiment, the pedal stroke quantity STR and the wheel speed signal $SPEED_i$ are calculated at the step #1 and the step #2 as shown in Fig. 3. The estimated vehicle body speed $WREF_i$ is calculated at the step #3. At this time, the maximum descent speed (-) $\Delta WREF_i$ is set to a constant value as shown at the above described step #191.

The detection of the lock symptom is effected at the step #4 in Fig. 3.

In the first embodiment in Fig. 6 showing the detection of the lock symptom, threshold values $C_5$, $C_6$, $C_7$ are made constant in the equations (2) and the equation (3) at the step #61. In the fourth embodiment, the value is adapted to be changed in accordance with the pedal stroke quantity.

The value of the skid timer $SKDTMR_i$ is checked at the step #192 of Fig. 20 (B). In a case where the value is 128 or more, it is judged that the operation is under a non-anti-lock controlling operation so as to move the step to a step #193. When the value is smaller than 128, it is judged that the operation is under an anti-lock controlling operation so as to move the step to a step #194.

At a step #193, the values of the threshold values $C_5$, $C_6$, $C_7$ are set as described hereinafter.

$$C_5 = 6 + \text{MAX} (STR, STRE_0 \text{ through } STRE_3) / 32$$

$$C_6 = -\text{MAX} (STR, STRE_0 \text{ through } STRE_3) / 80$$

$$C_7 = 5 + \text{MAX} (STR, STRE_0 \text{ through } STRE_3) / 16$$

At a step #194, the values of the threshold values $C_5$, $C_6$, $C_7$ are set as described hereinafter.

$$C_5 = 3 + \text{MAX} (STR, STRE_0 \text{ through } STRE_3) / 16$$

$$C_6 = -\text{MAX} (STR, STRE_0 \text{ through } STRE_3) / 80$$

$$C_7 = 5 + \text{MAX} (STR, STRE_0 \text{ through } STRE_3) / 16$$

Namely, in the fifth embodiment, the sensitivity for detecting the lock symptom is set so that the greater a larger one of the pedal stroke quantity STR in each control cycle and the pedal stroke quantity $STRE_i$ at the lock symptom detection edge becomes, the duller the lock symptom detection sensitivity becomes, and the smaller it becomes, the more sensitive the lock symptom detection sensitivity becomes.

The greater the pedal stroke quantity STR or the pedal stroke quantity $STRE_i$ at the lock symptom detection edge becomes, the higher the road surface μ becomes. The smaller it is, the lower the road surface is. When the threshold values $C_5$, $C_6$, $C_7$ are set as described hereinabove, the lower the road surface μ is, the more sensitive the lock symptom detection sensitivity becomes.

After the threshold values $C_5$, $C_6$, $C_7$ have been set as described hereinabove, the detection of the lock symptom at the step #61 through step #73 are effected as in the first embodiment, and the processing operation of the skid flag $SKDFLG_i$ and the skid timer $SKDTMR_i$ are effected.

An equation where the threshold value $C_5$ is set at the above described steps #193 and #194 is made different. A reason for it is that an item for MAX (STR, $STRE_0$ through $STRE_3$) is made small at a step #193 corresponding before the anti-lock control operation so as to prevent dispersion caused by the fast and slow stepping motion of the above described brake pedal, because the pedal stroke quantity $STR_i$ is different if the road surface μ is the same between fast stepping operation of the brake pedal and the slow stepping operation thereof before the anti-lock controlling start.

Although the setting and outputting of the pressure increasing or reducing signal $K_i$ are effected at the steps #5 and the step #6 in Fig. 3 after the lock symptom detecting operation, the processing operation is similar to that of the first embodiment.

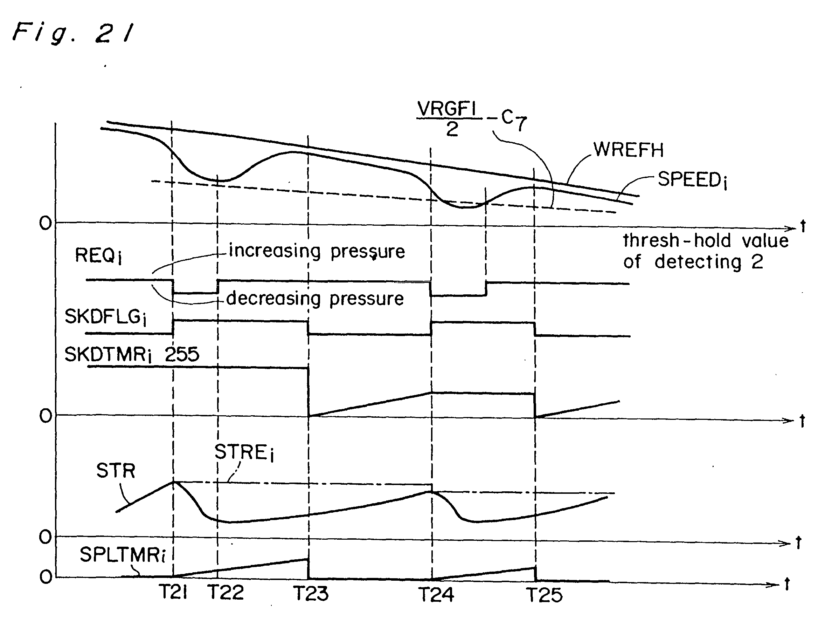

Fig. 21 shows a position example of an operation in the fifth embodiment.

When a first lock symptom is detected at a time T21, a control request $REQ_i$ is set to "pressure reduction" and the skid flag $SKDFLG_i$ is set to "1". The pedal stroke quantity STR at this time is stored in the pedal stroke quantity storing means $STR_i$ as a pedal stroke quantity $STRE_i$ at the start time of the skid cycle.

At a time T22, the control request $REQ_i$ is set to "pressure increase."

When it is detected at a time T23 that the synchronization between the wheel speed $SPEED_i$ and the estimated vehicle body speed $WREF_i$ is being recovered, the skid flag $SKDFLG_i$ is set to 0 and also, a skid timer $SKDTMR_i$ is cleared to "0."

For a period of time from a time T23 to a time T24, the lock symptom is not detected and a non-anti-locking control operation is on. The control request $REQ_i$ is "pressure increase" and the skid flag $SKDFLG_i$ is set "0." During a period of time, "1" is added for each control cycle to the skid timer $SKDTMR_i$. In the skid flag $SKDFLG_i$, a second lock symptom is detected at a time T24 and the lock symptom is cleared to "0" at a time point when the lock symptom has been released at a time T25.

During a period from the above time T21 to the time T25, the threshold value $C_7$ of the above described equation (3) is changed and a threshold for the wheel speed $SPEED_i$ is shown with dotted lines in the drawings.

In the fifth embodiment, the lock symptom detecting sensitivity is adapted to be set with sensitivity as the value is smaller, namely, the road surface friction coefficient is smaller, considering a value of a larger one between a pedal stroke STR and a pedal stroke quantity $STRE_i$ at the lock symptom detecting edge in the detection sensitivity of the lock symptom as described hereinabove. Therefore, according to the fifth embodiment, excessive sinking with respect to the estimated vehicle body speed $WREF_i$ of the wheel speed $SPEED_i$ on the low $\mu$ road surface can be reduced as shown in Fig. 21 and an ideal anti-lock control operation can be effected.

In a fifth embodiment, in an equation where threshold values $C_5$, $C_6$, $C_7$ at steps #193, #194 in the above described Fig. 20 (B) are set, MAX (STR, $STRE_0$ through $STRE_3$) is permuted to STR so as to set the detection sensitivity of the lock symptom detection edge in accordance with the pedal stroke quantity STR at each control cycle.

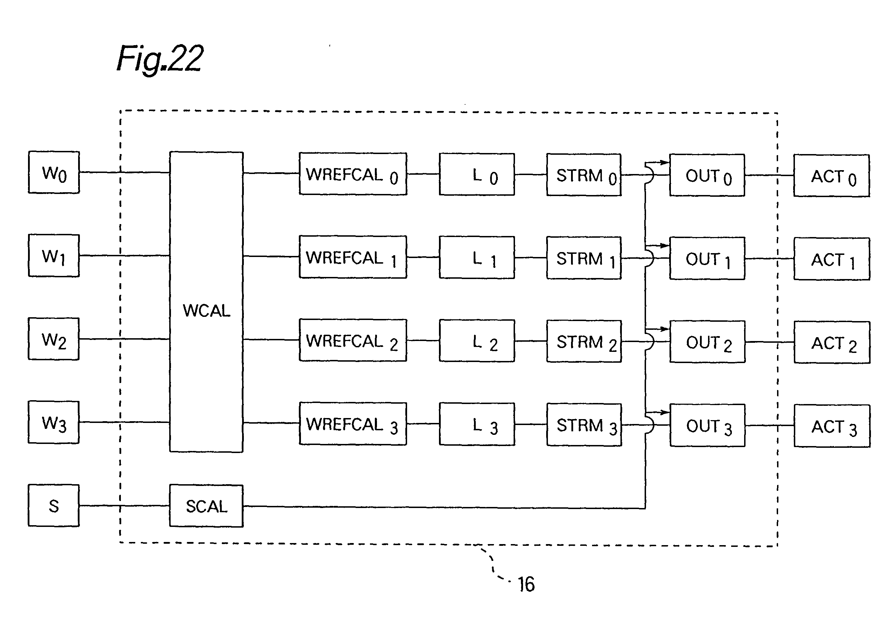

A sixth embodiment of the present invention shown in Fig. 22 will be described hereinafter.

In the sixth embodiment, pedal stroke quantities $STRE_0$ through $STRE_3$ stored in the pedal stroke quantity signal STR and pedal stoke quantity storing means $STRM_0$ through $STRM_3$ are inputted into the pressure increasing or reducing signal setting means $OUT_0$ through $OUT_3$ so as to correct the pressure increasing or reducing signal $K_i$ in accordance with the pedal stroke quantity.

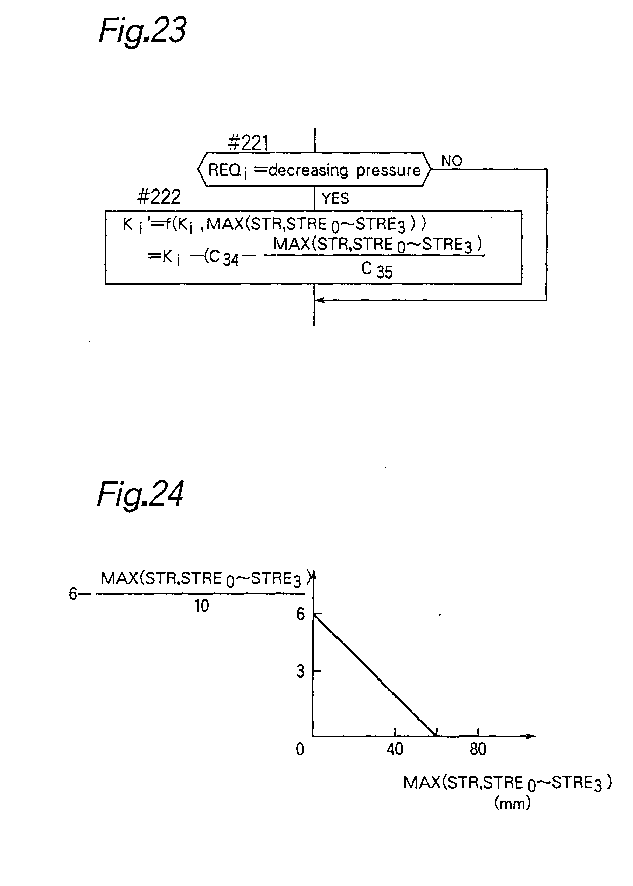

In the sixth embodiment, a function similar to Fig. 3 in the first embodiment is effected. Fig. 4 indicating the setting of the estimated vehicle body speed $WREF_i$ is different from the first embodiment in that a step #42 is permuted by a step #191 shown in Fig. 20 (A), and also, a processing operation shown in Fig. 23 is inserted into a portion S6 in Fig. 7 showing the setting operation of the increasing, reducing pressure signal $K_i$.

In the sixth embodiment, the maximum descent speed (-) $\Delta WREF_i$ is set to -1.25g.

In the sixth embodiment, as shown at the step #81 through the step # 85 in Fig. 7, a pressure increasing or reducing signal $K_i$ is set from a wheel speed $SPEED_i$, a differential value d/dt (SPEEDi) and second differential $d^2/dt^2$ (SPEED) have been set, and thereafter, the step is moved to a step #221 of Fig. 23.

At the step #221, the control request $REQ_i$ is checked so as to move the step to a step #222 in the case of "pressure reduction."

At the above described step #222, the pressure increasing, reducing signal $K_i$ is corrected by the following equation (17).

$$K'_i = f (K_i, MAX (STR, STRE_0 \text{ through } STRE_3)$$

$$= K_i - \{C_{34} - MAX (STR, STRE_0 \text{ through } STRE_3) / C_{35}\} \qquad (17)$$

where $C_{34}$, $C_{35}$ are constants set in accordance with the brake characteristics, in the sixth embodiment, $C_{34} = 6$, $C_{35} = 10$.

Fig. 24 indicates the values for correcting the pedal stroke quantity STR or $STRE_i$ and the pressure increasing or reducing signal $K_i$ when the constants $C_{34}$, $C_{35}$ have been set to the above described values, and indicates the relationship of $\{C_{34} - MAX (STR, STRE_0 \text{ through } STRE_3) / C_{35}\}$. As shown in Fig. 24, the correction quantity with respect to the original pressure increasing or reducing signal $K_i$ becomes smaller as the pedal stroke quantity STR or $STRE_i$ increases. When a pressure increasing or reducing signal $K_i$ before the correction is equal, the larger the above described pedal stroke quantities STR, $STRE_i$ become greater, the value of the pressure increasing or reducing signal $K'_i$ becomes greater as the above described pedal stroke quantities STR, $STRE_i$ become larger.

As shown in the above described Table 1, the greater the pressure increasing or reducing signal $K_i$ becomes and the closer to +8 the value becomes, the greater to the pressure reducing time $\Delta$tdump the pressuring increasing time $\Delta$tapply becomes in tendency. When the pressure increasing or reducing signal $K_i$ is corrected as in the sixth embodiment, the greater the pedal stroke quantity STR or $STRE_i$ becomes, namely, the greater the road surface friction coefficient $\mu$ becomes, the smaller the pressure reduction width becomes at one control cycle. Therefore, in the anti-lock controlling apparatus in the sixth embodiment, it prevents an excessive pressure reduction when the lock symptom has been caused on the high $\mu$ road surface.

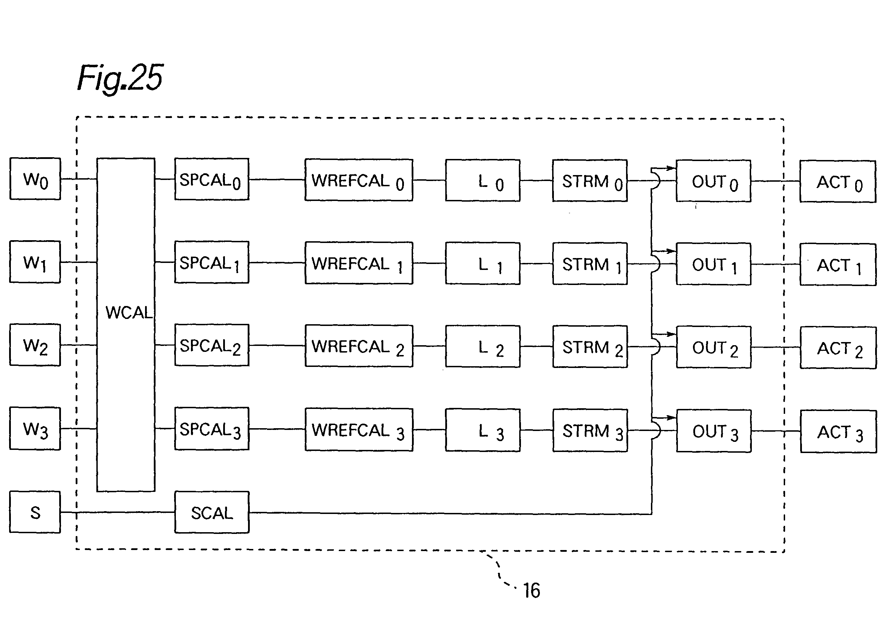

A seventh embodiment of the present invention shown in Fig. 25 will be described hereinafter.

In the seventh embodiment as in the sixth embodiment, the pedal stroke quantity STR at each control cycle and the pedal stroke quantity $STRE_0$ through $STRE_3$ at the lock symptom detecting edge stored in the pedal stroke quantity storing means $STRM_0$ through $STR_3$ at the lock symptom detection edge are adapted to be inputted into the pressure increasing or reducing signal setting means $OUT_0$ through $OUT_3$. The seventh embodiment is provided with split index calculating means $SPCAL_0$ through $SPCAL_3$ as in the above described second embodiment so as to constitute the split controlling operation.

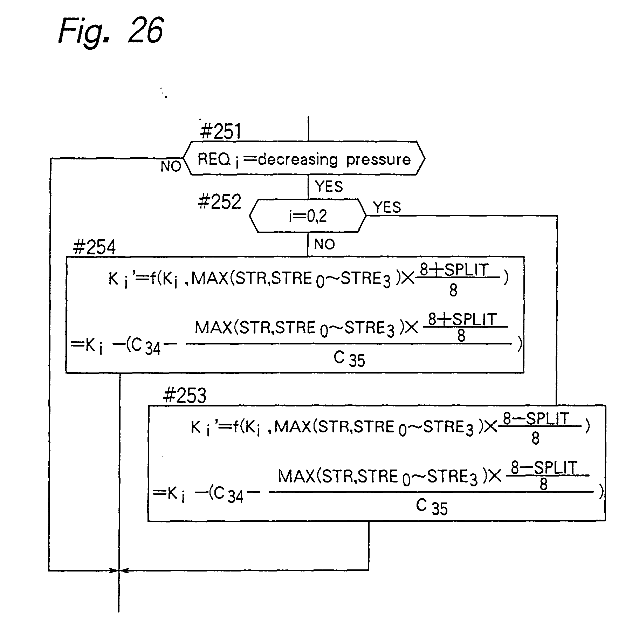

In the seventh embodiment, an operation almost similar to that of the second embodiment shown in Fig. 11 is effected, Fig. 4 indicating the setting of the estimated vehicle body speed $WREF_i$ is different from the first embodiment in that a step #42 is permuted by a step #191 shown in Fig. 20 (A), and also, a processing operation shown in Fig. 26 is inserted into a portion S6 in Fig. 7 showing the setting operation of the increasing, reducing pressure signal $K_i$.

In the seventh embodiment, a split index calculating means $SPCAL_0$ through $SPCAL_3$ calculates a split index SPLIT as shown in Fig. 12 at the step #7 in Fig. 11.

At the step #5 in Fig. 11, a pressure increasing or reducing signal $K_i$ is set. At this time, as shown in Fig. 7, the pressure increasing or reducing signal $K_i$ is set by an processing operation shown at step #81 through the step #85, and thereafter, the step moves to a step #251 in Fig. 26. At the step #251, the control request $REQ_i$ is checked. In a case of "pressure reduction", the step moves to a step #252.

At the step #252, it is checked whether or not i = 0 or 2. In i = 0, 2, namely, when the pressure increasing or reducing signal $K_i$ is corrected in accordance with the following equation (18) at the step #253 in the case of the left front wheel or the left rear wheel.

$$K_i' = f (K_i, MAX (STR, STRE_0 \text{ through } STRE_3)$$

$$x (8 - SPLIT) / 8)$$

$$= K_i - [C_{34} - \{MAX (STR, STRE_0 \text{ through } STRE_3)$$

$$x (8 - SPLIT) / 8\} / C_{35}] \tag{18}$$

At a step #252, when i = 0, 2 is not established, a pressure increasing or reducing signal $K_i$ is corrected in accordance with the following equation (19) at the step #254 in the case of a right front wheel or a right rear wheel.

$$K_i' = f (K_i, MAX (STR, STRE_0 \text{ through } STRE_3)$$

$$\times (8 + SPLIT) / 8)$$

$$= K_i - [C_{34} - \{MAX (STR, STRE_0 \text{ through } STRE_3)$$

$$\times (8 + SPLIT) / 8\} / C_{35}] \tag{19}$$

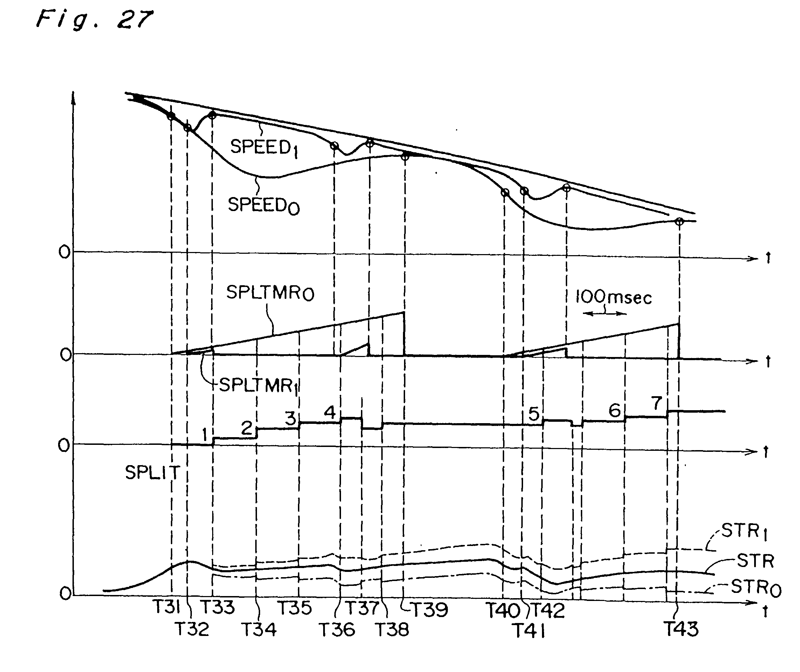

Fig. 27 shows one example of a concrete operation of a seventh embodiment.

Fig. 27 indicates a case where a vehicle is running on a split road surface where the left side of the vehicle is a low $\mu$ road surface, and a right side is a high $\mu$ road surface.

The lock symptom of the left front wheel (i = 0) is detected for a period of time from a time T31 to a time T39. During this period, "1" is added for each control cycle to a split timer $SPLTMR_0$. The lock symptom is detected to a time T32 about the above described time right front wheel (i = 1) so as to add 1 to the split timer $SPLTMR_i$. The lock

symptom is released at a time T33 so as to clear to "0".

When the split timer $SPLTMR_0$, $SPLTMR_1$ of the left, right front wheels are changed as described hereinabove, "+1" is added to the split index SPLIT for each twelfth time of the control cycle as shown at times T33, T34, T35, T36. At a time T37, "-1" is added so that the split index SPLIT may closer to 0 by the processing operation of the #125, #126.

When the lock symptom at a left front wheel is cleared at a time T39, the split timer $SPLTMR_0$ is cleared to "0".

As the lock symptom is not detected at both a left front wheel and a right front wheel for a period of time from a time T39 to a time T40, the split timers $SPLTMR_0$, $SPLTMR_1$ are retained at 0. As the lock symptom of the left front wheel and the lock symptom of the right front wheel are respectively detected at a time T40 and at a time T41, split timers TIMERS $SPLTMR_0$, $SPLTMR_1$ and a split index SPLIT are operated as from the above described time T31 to a time T43.

In Fig. 27, the pedal stroke quantity STR at each control cycle changes as shown with a solid line, while pedal stroke quantities $STR_0$, $STR_1$ (20) with respect to the left front wheel and the right front wheel corrected by the split index SPLIT are respectively changed as shown with one dot chain line.

$$STR_i$$

$$= MAX(STR,\ STRE_0 \sim STRE_3) \times \frac{8\text{-}SPLIT}{8}(i=0.2)$$

$$= MAX(STR,\ STRE_0 \sim STRE_3) \times \frac{8\text{+}STLIT}{8}(i=0.3) \tag{20}$$

Namely, the greater the split index becomes, and the greater the difference in frictional coefficient between the right and left road surfaces becomes, the greater the pedal stroke quantity $STR_1$ of the right front wheel (i = 1) which is on a high μ side becomes and the smaller the pedal stroke quantity of the left front wheel (i = 0) which is a low μ side becomes, so that difference between them is set to become larger. The pressure increasing or reducing signal is set in accordance with these corrected pedal stroke quantities $STR_0$, $STR_1$ and the outlet valves 4A through 4D can be opened, closed at a proper time in accordance with the road surface friction coefficient even on the split road surface, so that a preferable anti-lock controlling operation can be effected.

In the seventh embodiment as described hereinabove, the pressure increasing or reducing signal $K_i$ is corrected in accordance with a larger one of the pedal stroke quantity STR at each control cycle and the pedal stroke quantities $STRE_0$ through $STRE_3$ at the lock symptom detection edge so that the pressure increasing or reducing signal $K_i$ can be set properly in accordance with the road surface friction coefficient. As the split control is effected, a preferable controlling operation can be effected even in a case where a road surface μ becomes greater right, left of the vehicle.

The present invention is not restricted to the above described embodiment, but can be variably modified. For example, inlet valves 3A through 3B in Fig. 1 can be made a so-called three-position controlling operation as an on off type of solenoid valves.

As is clear from the foregoing description, according to the arrangement of the present invention, in an anti-lock brake controlling apparatus in accordance with the present invention, a signal from the pedal stroke quantity detecting means for detecting the stepping quantity of the brake pedal is inputted, considering correspondence between the stepping quantity of the brake pedal and the road surface friction coefficient, so as to set the signal for driving the fluid pressure control valve so that preferable anti-lock controlling operation can be effected in accordance with the road surface friction coefficient.

When an estimated vehicle body speed is adapted to be calculated in accordance with the stepping quantity of the brake pedal detected by the above described pedal stroke quantity detecting means, in addition to wheel movements, the vehicle body speed can be estimated with high accuracy with sufficient consideration of road surface friction coefficients.

Especially even when the maximum descent speed of the estimated vehicle body speed is set larger than at a uniform road surface time on the higher friction coefficient's surface, the vehicle body speed at a high accuracy can be estimated and a high stopping efficiency can be obtained.

Similarly, when the estimated vehicle body speed corresponding to a wheel positioned on the external side of the turning radius is set larger than at a straight line during the turning operation of the vehicle, the vehicle body speed can be estimated at high accuracy and a high stopping efficiency can be obtained.

When the bottom value of the estimated vehicle body speed is regulated at a value where the deviation quantity has been reduced from the maximum value of the estimated vehicle body speed at each wheel position, and the deviation quantity is increased in accordance with increase of the stepping quantity of the brake pedal, the dispersion of the estimated vehicle body speed can be reduced in accordance with the road surface friction coefficient.

When the detecting sensitivity of the lock symptom is adapted to be set with sensitivity as the stepping quantity of the brake pedal is smaller, the lock symptom on the low friction coefficient road surface can be quickly detected, because the detecting sensitivity of the lock symptom is set with sensitivity as the road surface of the road surface friction coefficient is lower.

When the pressure increasing or reducing signal which is an instruction of opening or closing with respect to the solenoid valve is adapted to be corrected in accordance with the stepping quantity of the above described brake pedal with a control valve as a solenoid valve, excessive pressure reduction is prevented on the high friction coefficient road surface and also, the insufficient pressure reaction on the low friction coefficient road surface can be removed and the adjustment of the proper wheel cylinder fluid pressure can be effected in accordance with the road surface condition.

In a case of the split road surface in this case, the proper pressure increasing or reducing signal can be outputted with respect to the solenoid valve even on the split road surface by the correction of the stepping quantity of the brake pedal so as to properly control the wheel cylinder fluid pressure.

**Claims**

1. An anti-lock brake controlling apparatus which includes a master cylinder (1) for feeding an operation fluid onto the side of a wheel cylinder (2A, 2B, 2C, 2D) in accordance with the actuation of a brake pedal (14), and a fluid pressure controlling valve (3A, 3B, 3C, 3D; 4A, 4B, 4C, 4D) for controlling the fluid pressure of said wheel cylinder, **characterized in that** there is provided a pedal stroke quantity detecting means (S) for detecting a stepping quantity (STR) of the brake pedal (14) based on the angle or linear movement thereof, said detected stepping quantity (STR) being used for detecting the friction coefficient ($\mu$) of a road surface so as to set a signal for driving the fluid pressure controlling valve in accordance with, at least, a signal from the pedal stroke quantity detecting means (S).

2. An anti-lock brake controlling apparatus as defined in claim 1, comprising a wheel speed detecting means ($W_0$, $W_1$, $W_2$, $W_3$) for detecting the speed of each wheel of a vehicle, a wheel movements calculating means (WCAL) for calculating the wheel movements including at least a wheel speed ($SPEED_i$) ($i = 0, 1, 2, 3$) in accordance with a signal from the wheel speed detecting means, an estimated vehicle body speed calculating means ($WREFCAL_i$) for calculating the estimated vehicle body speed ($WREF_i$) for each wheel in accordance with the wheel movements calculated by the wheel movements calculating means and the detected stepping quantity (STR) of the brake pedal (14).

3. An anti-lock brake controlling apparatus as defined in claim 2, wherein the estimated vehicle body speed calculating means ($WREFCAL_i$) is adapted to increase a maximum descent speed ($(-)\Delta WREF_i$) of the estimated vehicle body speed ($WREF_i$) in accordance with an increase of the stepping quantity (STR) detected by the pedal stroke quantity detecting means (S).

4. An anti-lock brake controlling apparatus as defined in claim 2, wherein the estimated vehicle body speed calculating means ($WREFCAL_i$) is adapted to increase the maximum descent speed ($(-)\Delta WREF_i$) of the estimated vehicle body speed ($WREF_i$) for a wheel on a road surface where a road surface friction coefficient ($\mu$) is larger, in the event that the friction coefficients of the road surface where the vehicle is running show a large difference between the right-hand side and the left-hand side of the vehicle, and to set it to a value greater than the maximum descent speed for a road surface having uniform friction coefficients.

5. An anti-lock brake controlling apparatus as defined in claim 2, wherein the estimated vehicle body speed calculating means ($WREFCAL_i$) is adapted to increase, in accordance with an increase in the stepping quantity (STR) detected by the pedal stroke quantity detecting means (S), the maximum descent speed ($(-)\Delta WREF_i$) of the estimated vehicle body speed ($WREF_i$) corresponding to a wheel positioned on the external side of a turning radius when the vehicle is turning, and to set it to a value greater than the maximum descent speed for a case when the vehicle travels straight ahead.

6. An anti-lock brake controlling apparatus as defined in claim 2, wherein the estimated vehicle body speed calculating means ($WREFCAL_i$) is adapted to set the maximum descent speed ($(-)\Delta WREF_i$) of the estimated vehicle body speed ($WREF_i$) so that it may be increased in accordance with the increase of a value (MAX) which is the greater one of the stepping quantity (STR) in each control cycle detected by the pedal stroke quantity detecting means (S) and the stepping quantity ($STRE_i$) at a skid cycle starting time.

7. An anti-lock brake controlling apparatus as defined in claim 2, wherein the estimated vehicle body speed calculating

means (WREFCAL$_i$) is adapted to regulate a bottom value of the estimated vehicle body speed (WREF$_i$) with a value obtained by subtracting a given deviation quantity ($\Delta$WREF) from a maximum value (WREFH) of the estimated vehicle body speed (WREF$_i$) of each wheel so as to increase the deviation quantity ($\Delta$WREF) in accordance with the increase of a value (MAX) which is the larger one of the stepping quantity (STR) of each control cycle and the stepping quantity (STRE$_i$) at the starting time of a skid cycle.

8. An anti-lock brake controlling apparatus as defined in claim 1, comprising a wheel speed detecting means (W$_0$, W$_1$, W$_2$, W$_3$) for detecting the speed (SPEED$_i$) (i = 0, 1, 2, 3) of each wheel of a vehicle, a wheel movements calculating means (WCAL) for calculating the wheel movements including at least wheel speed in accordance with a signal from the wheel speed detecting means, a lock symptom detecting means (L$_0$, L$_1$, L$_2$, L$_3$) for detecting a lock symptom in accordance with the wheel movements calculated by the wheel movements calculating means and the stepping quantity (STR) of the brake pedal (14) detected by the pedal stroke quantity detecting means (S).

9. An anti-lock brake controlling apparatus as defined in claim 8, wherein the lock symptom detecting means (L$_0$, L$_1$, L$_2$, L$_3$) is adapted to increase the detection sensitivity for the lock symptoms if the stepping quantity (STR) of the brake pedal (14) detected by the pedal stroke quantity detecting means (S) is smaller.

10. An anti-lock brake controlling apparatus as defined in claim 8, wherein the lock symptom detecting means (L$_0$, L$_1$, L$_2$, L$_3$) is adapted to increase the detection sensitivity for the lock symptoms if a value (MAX) which is the larger one of the stepping quantity (STR) of the brake pedal (14) at each control cycle detected by the pedal stroke quantity detecting means (S) and the stepping quantity (STRE$_i$) of the brake pedal (14) at a skid cycle start time, is smaller.

11. An anti-lock brake controlling apparatus comprising a fluid pressure control valve (3A, 3B, 3C, 3D; 4A, 4B, 4C, 4D) composed of a solenoid valve, a wheel cylinder (2A, 2B, 2C, 2D) adapted to be supplied with increased or reduced fluid pressure by a switching operation of the solenoid valve, a wheel speed detecting means (W$_0$, W$_1$, W$_2$, W$_3$) for detecting the speed (SPEED$_i$) (i = 0, 1, 2, 3) of each wheel of a vehicle, a wheel movements calculating means (WCAL) for calculating the wheel movements including at least a wheel speed in accordance with a signal from the wheel speed detecting means (W$_0$, W$_1$, W$_2$, W$_3$), and a pressure increasing or reducing signal setting means for setting a pressure increasing or reducing signal (K$_i$) which is an instruction for a switching operation with respect to the solenoid valve, and the pressure increasing or reducing signal setting means is adapted to set the pressure increasing or reducing signal (K$_i$) for reducing the fluid pressure of the wheel cyclinder (2A, 2B, 2C, 2D) in accordance with the wheel movements calculated by the wheel movements calculating means (WCAL) and a stepping quantity (STR) of a brake pedal (14) detected by a pedal stroke quantity detecting means (S) based on the angle or linear movement of the brake pedal (14).

12. An anti-lock brake controlling apparatus as defined in claim 11, wherein the pressure increasing or reducing signal setting means is adapted to correct, in accordance with the stepping quantity (STR) of the brake pedal (14) detected by the pedal stroke quantity detecting means (S), the pressure increasing or reducing signal (K$_i$) for reducing the fluid pressure of the wheel cylinder (2A, 2B, 2C, 2D) set in accordance with the wheel movements calculated by the wheel movements calculating means (WCAL).

13. An anti-lock brake controlling apparatus as defined in claim 11, wherein the pressure increasing or reducing signal setting means is adapted to correct, in accordance with a value (MAX) which is the larger one of the stepping quantity (STR) of the brake pedal (14) at each control cycle and a stepping quantity (STRE$_i$) at a skid cycle starting time, the pressure increasing or reducing signal (K$_i$) for reducing the fluid pressure of the wheel cylinder (2A, 2B, 2C, 2D) set in accordance with the wheel movements calculated by the wheel movements calculating means (WCAL).

14. An anti-lock brake controlling apparatus as defined in claim 11, wherein the pressure increasing or reducing signal setting means is adapted to correct, in accordance with the difference between right and left road surface friction coefficients ($\mu$), the pressure increasing or reducing signal (K$_i$) set in accordance with the wheel movements calculated by the wheel movements calculating means (WCAL) and the stepping quantity (STR) of the brake pedal (14) detected by the pedal stroke detecting means (S), when the road surface friction coefficients on the road surface on which a vehicle is running, show a large difference on right and left sides of the vehicle.

**Patentansprüche**

1. ABS-Regelvorrichtung, welche einen Hauptzylinder (1) zum Zuführen eines Betätigungsfluids auf die Seite eines Radzylinders (2A, 2B, 2C, 2D) gemäß der Betätigung eines Bremspedals (14) und ein Fluiddruckregelventil (3A, 3B, 3C, 3D; 4A, 4B, 4C, 4D) zum Regeln des Fluiddruckes des Radzylinders enthält,
   **dadurch gekennzeichnet, daß** eine Pedalhubgrößen-Detektionseinrichtung (S) vorgesehen ist, um eine Betätigungsgröße (STR) des Bremspedals (14) auf der Basis des Winkels oder linearen Bewegung davon zu detektieren, wobei die detektierte Betätigungsgröße (STR) für die Detektion des Reibungskoeffizienten (μ) einer Straßenoberfläche verwendet wird, um so ein Signal für die Ansteuerung des Fluiddruckregelventils gemäß mindestens einem Signal aus der Pedalhubgrößen-Detektionseinrichtung (S) einzustellen.

2. ABS-Regelvorrichtung nach Anspruch 1, welche eine Radgeschwindigkeits-Detektionseinrichtung ($W_0$, $W_1$, $W_2$, $W_3$) zur Detektion der Geschwindigkeit jedes Rades eines Fahrzeugs, eine Radbewegungs-Berechnungseinrichtung (WCAL) zum Berechnen der Radbewegungen einschließlich mindestens einer Radgeschwindigkeit $SPEED_i$ (i = 0, 1, 2, 3), gemäß einem Signal aus der Radgeschwindigkeits-Detektionseinrichtung, und eine Fahrzeugkarosserie-Schätzgeschwindigkeits-Berechnungseinrichtung ($WREFCAL_i$) zum Berechnen der Fahrzeugkarosserie-Schätzgeschwindigkeit ($WREF_i$) für jedes Rad gemäß den von der Radbewegungs-Berechnungseinrichtung berechneten Radgeschwindigkeiten und der detektierten Betätigungsgröße (STR) des Bremspedals (14) aufweist.

3. ABS-Regelvorrichtung nach Anspruch 2, wobei die Fahrzeugkarosserie-Schätzgeschwindigkeits-Berechnungseinrichtung ($WREFCAL_i$) dafür angepaßt ist, daß sie eine maximale Geschwindigkeitsabnahme ($(-)\Delta WREF_i$) der Fahrzeugkarosserie-Schätzgeschwindigkeit ($WREF_i$) gemäß einer von der Pedalhubgrößen-Detektionseinrichtung (S) detektierten Erhöhung der Betätigungsgröße STR erhöht.

4. ABS-Regelvorrichtung nach Anspruch 2, wobei die Fahrzeugkarosserie-Schätzgeschwindigkeits-Berechnungseinrichtung ($WREFCAL_i$) dafür angepaßt ist, die maximale Geschwindigkeitsabnahme ($(-)\Delta WREFi$) der Fahrzeugkarosserie-Schätzgeschwindigkeit ($WREF_i$) für ein Rad auf einer Straßenoberfläche, auf welcher der Straßenoberflächen-Reibungskoeffizient (μ) größer ist, in dem Falle, daß die Reibungskoeffizienten der Straßenoberfläche, auf welcher das Fahrzeug fährt, eine große Differenz zwischen der rechten und der linken Seite des Fahrzeugs zeigen, zu erhöhen, und sie auf einen Wert einzustellen, der größer als die maximale Geschwindigkeitsabnahme für eine Straßenoberfläche mit gleichmäßigen Reibungskoeffizienten ist.

5. ABS-Regelvorrichtung nach Anspruch 2, wobei die Fahrzeugkarosserie-Schätzgeschwindigkeits-Berechnungseinrichtung ($WREFCAL_i$) dafür angepaßt ist, gemäß einen Anstieg der von der Pedalhubgrößen-Detektionseinrichtung (S) detektierten Betätigungsgröße (STR), die maximale Geschwindigkeitsabnahme ($(-)\Delta WREFi$) der Fahrzeugkarosserie-Schätzgeschwindigkeit ($WREF_i$) entsprechend einem Rad, das auf der Außenseite eines Kurvenradiuses angeordnet ist, zu erhöhen, wenn das Fahrzeug eine Kurve fährt, und sie auf einen Wert einzustellen, der größer als die maximale Geschwindigkeitsabnahme für einen Fall ist, wenn das Fahrzeug geradeaus fährt.

6. ABS-Regelvorrichtung gemäß Anspruch 2, wobei die Fahrzeugkarosserie-Schätzgeschwindigkeits-Berechnungseinrichtung ($WREFCAL_i$) dafür angepaßt ist, die maximale Geschwindigkeitsabnahme ($(-)\Delta WREF_i$) der Fahrzeugkarosserie-Schätzgeschwindigkeit ($WREF_i$) so einzustellen, daß sie gemäß der Zunahme eines Wertes (MAX), welcher der größere von der Betätigungsgröße (STR) in jedem von der Pedalhubgrößen-Detektionseinrichtung (S) detektierten Regelzyklus, und der Betätigungsgröße ($STRE_i$) bei jedem Hemmzyklus-Startzeitpunkt ist, erhöht werden kann.

7. ABS-Regelvorrichtung gemäß Anspruch 2, wobei die Fahrzeugkarosserie-Schätzgeschwindigkeits-Berechnungseinrichtung ($WREFCAL_i$) dafür angepaßt ist, einen unteren Wert der Fahrzeugkarosserie-Schätzgeschwindigkeit ($WREF_i$) auf einen Wert zu regeln, der durch Subtrahieren einer gegebenen Abweichungsgröße ($\Delta WREF$) von einem maximalen Wert (WREFH) der Fahrzeugkarosserie-Schätzgeschwindigkeit ($WREF_i$) jedes Rades erhalten wird, um so die Abweichungsgröße ($\Delta WREF$) gemäß der Zunahme eines Wertes (MAX) zu erhöhen, welcher der größere von der Betätigungsgröße (STR) jedes Regelzyklusses und der Betätigungsgröße ($STRE_i$) zum Startzeitpunkt eines Hemmzyklusses ist.

8. ABS-Regelvorrichtung gemäß Anspruch 1, welche eine Radgeschwindigkeits-Detektionseinrichtung ($W_0$, $W_1$, $W_2$, $W_3$) zur Detektion der Geschwindigkeit ($SPEED_i$) (1= 0, 1, 2, 3) jedes Rades eines Fahrzeugs, eine Radbewegungs-Berechnungseinrichtung (WCAL) zum Berechnen der Radbewegungen einschließlich mindestens einer Radgeschwindigkeit gemäß einem Signal aus der Radgeschwindigkeits-Detektionseinrichtung, und eine Blockie-

rungssymptom-Detektionseinrichtung ($L_0$, $L_1$, $L_2$, $L_3$) zum Detektieren eines Blockierungssymptoms gemäß den von der Radbewegungs-Berechnungseinrichtung berechneten Radbewegungen und der Betätigungsgröße (STR) des Bremspedals (14) aufweist, welche von der Pedalhubgrößen-Detektionseinrichtung (S) detektiert wird.

9. ABS-Regelvorrichtung nach Anspruch 8, wobei die Blockierungssymptom-Detektionseinrichtung ($L_0$, $L_1$, $L_2$, $L_3$) dafür angepaßt ist, die Detektionsempfindlichkeit für die Blokkierungssymptome zu erhöhen, wenn die von der Pedalhubgrößen-Detektionseinrichtung (S) detektierte Betätigungsgröße (STR) des Bremspedals (14) kleiner ist.

10. ABS-Regelvorrichtung gemäß Anspruch 8, wobei die Blokkiersymptomdetektionseinrichtung ($L_0$, $L_1$, $L_2$, $L_3$) dafür angepaßt ist, die Detektionsempfindlichkeit für die Blokkierungssymptome zu erhöhen, wenn ein Wert (MAX), welcher der größere von der bei jedem Regelzyklus von der Pedalhubgrößen-Detektionseinrichtung (S) detektierten Betätigungsgröße (STR) des Bremspedals (14) und der Betätigungsgröße ($STRE_i$) des Bremspedals (14) zum Hemmzyklus-Startzeitpunkt ist, kleiner ist.

11. ABS-Regelvorrichtung mit einem Fluiddruckregelventil (3A, 3B, 3C, 3D; 4A, 4B, 4C, 4D) bestehend aus einem Magnetventil, einem Radzylinder (2A, 2B, 2C, 2D) der dafür angepaßt ist, mit einem erhöhten oder verringerten Fluiddruck durch einen Schaltvorgang des Magnetventils versorgt zu werden, einer Radgeschwindigkeits-Detektionseinrichtung ($W_0$, $W_1$, $W_2$, $W_3$) zum Detektieren der Geschwindigkeit ($SPEED_i$) (i = 0, 1, 2, 3) jedes Rades eines Fahrzeugs, einer Radbewegungs-Berechnungseinrichtung (WCAL) zum Berechnen der Radbewegungen einschließlich mindestens einer Radgeschwindigkeit gemäß einem Signal aus der Radgeschwindigkeits-Detektionseinrichtung ($W_0$, $W_1$, $W_2$, $W_3$), und einer Druckerhöhungs- oder Verringerungssignal-Einstelleinrichtung zum Einstellen eines Druckerhöhungsoder Verringerungssignals ($K_i$), welches ein Befehl für einen Schaltvorgang bezüglich des Magnetventils ist, und wobei die Druckerhöhungs- oder Verringerungssignal-Einstelleinrichtung dafür angepaßt ist, das Druckerhöhungsoder Verringerungssignal ($K_i$) zum Verringern des Fluiddruckes des Radzylinders (2A, 2B, 2C, 2D) gemäß den von der Radbewegungs-Berechnungseinrichtung (WCAL) berechneten Radbewegungen und einer von einer Pedalhubgrößen-Detektionseinrichtung (S) auf der Basis eines Winkels oder linearen Bewegung des Bremspedals (14) detektierten Betätigungsgröße (STR) einzustellen.

12. ABS-Regelvorrichtung gemäß Anspruch 11, wobei die Drukkerhöhungs- oder Verringerungssignal-Einstelleinrichtung dafür angepaßt ist, gemäß der von der Pedalhubgrößen-Detektionseinrichtung (S) detektierten Betätigungsgröße (STR) des Bremspedals (14), das Druckerhöhungs- oder Verringerungssignal ($K_i$) zu korrigieren, um den Fluiddruck des Radzylinders (2A, 2B, 2C, 2D) zu reduzieren, welcher gemäß den von der Radbewegungs-Berechnungseinrichtung (WCAL) berechneten Radbewegungen eingestellt wird.

13. ABS-Regelvorrichtung gemäß Anspruch 11, wobei die Druckerhöhungs- oder Verringerungssignal-Einstelleinrichtung dafür angepaßt ist, gemäß einem Wert (MAX), welcher der größere von der Betätigungsgröße (STR) des Bremspedals (14) bei jedem Regelzyklus und einer Betätigungsgröße ($STRE_i$) zu einem Hemmzyklus-Startzeitpunkt ist, das Drukkerhöhungs- oder Verringerungssignal ($K_i$) zu korrigieren, um den Fluiddruck des Radzylinders (2A, 2B, 2C, 2D) der gemäß den von der Radbewegungs-Berechnungseinrichtung (WCAL) berechneten Radbewegung eingestellt wird, zu verkleinern.

14. ABS-Regelvorrichtung gemäß Anspruch 11, wobei die Druckerhöhungs- oder Verringerungssignal-Einstelleinrichtung dafür angepaßt ist, gemäß der Differenz zwischen rechten und linken Straßenoberflächen-Reibungskoeffizienten ($\mu$), das Druckerhöhungs- oder Verringerungssignal ($K_i$), welches gemäß von der Radbewegungs-Berechnungseinrichtung (WCAL) berechneten Radbewegungen und der von der Pedalhubgrößen-Detektionseinrichtung (S) detektierten Betätigungsgröße (STR) des Bremspedals (14) eingestellt wird, zu korrigieren, wenn die Straßenoberflächen-Reibungskoeffizienten auf der Straßenoberfläche, auf welcher ein Fahrzeug fährt, einen großen Unterschied auf der rechten und linken Seite des Fahrzeuges zeigen.

**Revendications**

1. Appareil de commande de frein anti-bloquant qui comprend un maître cylindre (1) pour délivrer un fluide de fonctionnement sur le côté d'un cylindre de roue (2A, 2B, 2C, 2D) conformément à la manoeuvre d'une pédale de frein (14), et une soupape de commande de pression de fluide (3A, 3B, 3C, 3D ; 4A, 4B, 4C, 4D) pour commander la pression de fluide dudit cylindre de roue, **caractérisé en ce qu'**il est prévu un moyen de détection de quantité de course de pédale (S) pour détecter une quantité de progression (STR) de la pédale de frein (14) en fonction de l'angle ou du mouvement linéaire de celle-ci, ladite quantité de progression détectée (STR) étant utilisée pour détecter le coefficient de frottement (μ) d'une surface de la route de manière à régler un signal de commande de la soupape de pression de fluide conformément avec, au moins, un signal provenant du moyen de détection de quantité de course de pédale (S).

2. Appareil de commande de frein anti-bloquant selon la revendication 1, comprenant des moyens de détection de vitesse de roue ($W_0$, $W_1$, $W_2$, $W_3$) pour détecter la vitesse de chaque roue d'un véhicule, des moyens de calcul de mouvements de roue (WCAL) pour calculer les mouvements de roue comprenant au moins une vitesse de roue ($SPEED_i$) (i = 0, 1, 2, 3) conformément à un signal provenant du moyen de détection de vitesse de roue, des moyens de calcul de vitesse estimée de carrosserie du véhicule ($WREFCAL_i$) pour calculer la vitesse estimée de carrosserie du véhicule ($WREF_i$) pour chaque roue conformément aux mouvements de roue calculés par les moyens de calcul de mouvements de roue et la quantité de progression détectée (STR) de la pédale de frein (14).

3. Appareil de commande de frein anti-bloquant selon la revendication 2, dans lequel les moyens de calcul de vitesse estimée de carrosserie du véhicule ($WREFCAL_i$) sont destinés à augmenter une vitesse de ralentissement maximum $((-)\Delta WREF_i)$ de la vitesse estimée de carrosserie du véhicule ($WREF_i$) conformément à un accroissement de la quantité de progression (STR) détectée par les moyens de détection de la quantité de course de pédale (S).

4. Appareil de commande de frein anti-bloquant selon la revendication 2, dans lequel les moyens de calcul de vitesse estimée de carrosserie du véhicule ($WREFCAL_i$) sont destinés à augmenter la vitesse de ralentissement maximum $((-)\Delta WREF_i)$ de la vitesse estimée de carrosserie du véhicule ($WREF_i$) pour une roue sur une surface de route où un coefficient de frottement de surface de route (μ) est plus grand, dans le cas où les coefficients de frottement de la surface de la route sur laquelle se déplace le véhicule présentent une grande différence entre le côté droit et le côté gauche du véhicule, et pour la fixer à une valeur plus grande que la vitesse de ralentissement maximum pour une surface de route ayant des coefficients de frottement uniformes.

5. Appareil de commande de frein anti-bloquant selon la revendication 2, dans lequel les moyens de calcul de vitesse estimée de carrosserie du véhicule ($WREFCAL_i$) sont destinés à augmenter, conformément à un accroissement de la quantité de progression (STR) détectée par les moyens de détection de quantité de course de pédale (S), la vitesse de ralentissement maximum $((-)\Delta WREF_i)$ de la vitesse estimée de carrosserie du véhicule ($WREF_i$) correspondant à une roue disposée sur le côté extérieur d'un angle de braquage lorsque le véhicule tourne, et pour la fixer à une valeur supérieure à la vitesse de ralentissement maximum pour le cas où le véhicule se déplace en ligne droite.

6. Appareil de commande de frein anti-bloquant selon la revendication 2, dans lequel les moyens de calcul de vitesse estimée de carrosserie du véhicule ($WREFCAL_i$) sont destinés à fixer la vitesse de ralentissement maximum $((-)\Delta WREF_i)$ de la vitesse estimée de la carrosserie du véhicule ($WREF_i$) de sorte qu'elle peut être augmentée conformément à l'accroissement d'une valeur (MAX) qui est la plus grande de la quantité de progression (STR) dans chaque cycle de commande détectée par les moyens de détection de quantité de course de pédale (S) et de la quantité de progression ($STRE_i$) à un instant de début du cycle de dérapage.

7. Appareil de commande de frein anti-bloquant selon la revendication 2, dans lequel les moyens de calcul de la vitesse estimée de la carrosserie du véhicule ($WREFCAL_i$) sont destinés à réguler une valeur inférieure de la vitesse estimée de la carrosserie du véhicule ($WREFCAL_i$) avec une valeur obtenue en retranchant une quantité d'écart donnée ($\Delta WREF$) à partir d'une valeur maximum (WREFH) de la vitesse estimée de la carrosserie du véhicule ($WREF_i$) de chaque roue de manière à augmenter la quantité d'écart ($\Delta WREF$) conformément à l'accroissement d'une valeur (MAX) qui est la plus grande de la quantité de progression (STR) de chaque cycle de commande et de la quantité de progression ($STRE_i$) à l'instant du début d'un cycle de dérapage.

8. Appareil de commande de frein anti-bloquant selon la revendication 1, comprenant des moyens de détection de vitesse de roue ($W_0$, $W_1$, $W_2$, $W_3$) pour détecter la vitesse ($SPEED_i$) (i = 0, 1, 2, 3) de chaque roue d'un véhicule, des moyens de calcul de mouvements de roue (WCAL) pour calculer les mouvements de roue comprenant au moins une vitesse de roue conformément à un signal provenant des moyens de détection de vitesse de roue, des moyens de détection de signes de blocage ($L_0$, $L_1$, $L_2$, $L_3$) pour détecter un signe de blocage conformément aux mouvements de roue calculés par les moyens de calcul de mouvements de roue et la quantité de progression (STR) de la pédale de frein (14) détectée par les moyens de détection de quantité de course de pédale (S).

9. Appareil de commande de frein anti-bloquant selon la revendication 8, dans lequel les moyens de détection de signes de blocage ($L_0$, $L_1$, $L_2$, $L_3$) sont destinés à augmenter la sensibilité de détection des signes de blocage si la quantité de progression (STR) de la pédale de frein (14) détectée par les moyens de détection de quantité de course de pédale (S) est plus faible.

10. Appareil de commande de frein anti-bloquant selon la revendication 8, dans lequel les moyens de détection de signes de blocage ($L_0$, $L_1$, $L_2$, $L_3$) sont destinés à augmenter la sensibilité de détection des signes de blocage si une valeur (MAX) qui est la plus grande de la quantité de progression (STR) de la pédale de frein (14) à chaque cycle de commande détectée par les moyens de détection de quantité de course de pédale (S) et de la quantité de progression ($STRE_i$) de la pédale de frein (14) à un instant de début de cycle de dérapage, est plus faible.

11. Appareil de commande de frein anti-bloquant comprenant une soupape de commande de pression de fluide (3A, 3B, 3C, 3D ; 4A, 4B, 4C, 4D) constituée d'une. électrovanne, un cylindre de roue (2A, 2B, 2C, 2D) destiné à être alimenté avec une pression de fluide accrue ou réduite par une opération de commutation de l'électrovanne, des moyens de détection de vitesse de roue ($W_0$, $W_1$, $W_2$, $W_3$) pour détecter la vitesse ($SPEED_i$) (i = 0, 1, 2, 3) de chaque roue d'un véhicule, des moyens de calcul de mouvements de roue (WCAL) pour calculer les mouvements de roue comprenant au moins une vitesse de roue conformément à un signal provenant des moyens de détection de vitesse de roue ($W_0$, $W_1$, $W_2$, $W_3$), et des moyens de fixation de signal d'accroissement ou de réduction de pression pour fixer une pression augmentant ou réduisant un signal ($K_i$) qui est une instruction pour une opération de commutation vis-à-vis de l'électrovanne, et les moyens de fixation de signal d'augmentation ou de réduction de pression sont destinés à fixer le signal d'augmentation ou de réduction de pression ($K_i$) pour réduire la pression de fluide du cylindre de roue (2A, 2B, 2C, 2D) conformément aux mouvements de roue calculés par les moyens de calcul de mouvements de roue (WCAL) et une quantité de progression (STR) d'une pédale de frein (14) détectée par les moyens de détection de quantité de course de pédale (S) en fonction de l'angle ou du mouvement linéaire de la pédale de frein (14).

12. Appareil de commande de frein anti-bloquant selon la revendication 11, dans lequel les moyens de fixation de signal d'accroissement ou de réduction de pression sont destinés à corriger, conformément à la quantité de progression (STR) de la pédale de frein (14) détectée par les moyens de détection de quantité de course de pédale (S), le signal d'accroissement ou de réduction de pression ($K_i$) pour réduire la pression de fluide du cylindre de roue (2A, 2B, 2C, 2D) fixé conformément aux mouvements de roue calculés par les moyens de calcul de mouvements de roue (WCAL).

13. Appareil de commande de frein anti-bloquant selon la revendication 11, dans lequel les moyens de fixation de signal d'augmentation ou de réduction de pression sont destinés à corriger, conformément à une valeur (MAX) qui est la plus grande d'une quantité de progression (STR) de la pédale de frein (14) à chaque cycle de commande et d'une quantité de progression ($STRE_i$) à un instant de début du cycle de dérapage, le signal d'augmentation ou de réduction de pression ($K_i$) pour réduire la pression de fluide du cylindre de roue (2A, 2B, 2C, 2D) fixée conformément aux mouvements de roue calculés par les moyens de calcul de mouvements de roue calculés par les moyens de calcul de mouvements de roue (WCAL).

14. Appareil de commande de frein anti-bloquant selon la revendication 11, dans lequel les moyens de fixation de signal d'accroissement ou de réduction de pression sont destinés à corriger, conformément à la différence entre les coefficients de frottement de surface de la route droit et gauche (μ), le signal d'accroissement ou de réduction de pression ($K_i$) fixé conformément aux mouvements de roue calculés par les moyens de calcul de mouvements de roue (WCAL) et la quantité de progression (STR) de la pédale de frein (14) détectée par les moyens de détection de course de pédale (S), lorsque les coefficients de frottement de la surface de la route sur la surface d'une route sur laquelle se déplace un véhicule, présentent une grande différence sur les côtés droit et gauche du véhicule.

Fig.1

Fig.2

# Fig.3

```
                    ┌──────────────┐
                    │    start     │
                    └──────┬───────┘
                           │
        ┌──────────────────────────────────────┐
   #1   │   input signals from stroke          │
        │   sensor S input signals from        │
        │   wheel speed sensor W_i             │
        └──────────────────────────────────────┘
                           │
        ┌──────────────────────────────────────┐
   #2   │  calculate pedal stroke amount STR    │
        │    calculate wheel speed SPEED_i      │
        └──────────────────────────────────────┘
                           │
        ┌──────────────────────────────────────┐
   #3   │       calculate estimated             │
        │       vehicle speed WREF_i            │
        └──────────────────────────────────────┘
                           │
        ┌──────────────────────────────────────┐
   #4   │         detect lock sign              │
        └──────────────────────────────────────┘
                           │
        ┌──────────────────────────────────────┐
   #5   │  set up increasing or decreasing      │
        │       pressure signal K_i             │
        └──────────────────────────────────────┘
                           │
        ┌──────────────────────────────────────┐
   #6   │  output increasing or decreasing      │
        │        pressure signal                │
        └──────────────────────────────────────┘
                           │
                    ┌──────────────┐
                    │    return    │
                    └──────────────┘
```

EP 0 619 208 B1

# Fig.4

start

········· S3

$i=0$

#41   $(+)\Delta WREF_i = 2g$

#42   $(-)\Delta WREF_i = -C_1 \cdot g - \dfrac{MAX(STR, STRE_0 \sim STRE_3)}{C_2} \times C_3 \cdot g$   (MIN. $C_4$)

#43   $SPEED_i$ of present time > $WREF_i$ of last time

YES   NO

#45   $SPEED_i$ of present time > $WREF_i$ of last time $+(+)\Delta WREF_i$

#44   $SPEED_i$ of present time < $WREF_i$ of last time $+(-)\Delta WREF_i$   NO

NO   YES   YES

#48   $WREF_i = SPEED_i$

#49   $WREF_i = WREF_i$ of last time $+(+)\Delta WREF_i$

#47   $WREF_i = WREF_i$ of last time $+(-)\Delta WREF_i$

#46   $WREF_i = SPEED_i$

$i=i+1$

NO   $i=4$

#50   $WREFH = MAX(WREF_{0,1,2,3})$

········· S4

return

28

# Fig.5

*Fig.6*

start

i=0

········ S5

#61
$WREF_i - SPEED_i \geqq WREFH/16 + C_5$
and $\frac{d}{dt} SPEED_i \leqq -1.5g + C_6$ — YES

NO

#63
$WREF_i - SPEED_i \geqq WREFH/2 + C_7$ — YES

NO

#62
$SKDFLG_i$ of last time=0 — YES

NO

#65 $STRE_i \leftarrow STR$

#66 $SKDFLG_i = 1$

#64 $REQ_i = $ increasing pressure

#67 $REQ_i = $ decreasing pressure

#68 $SKDFLG_i = 1$ — NO

YES

········ S1

········ S2

#69
$SKDTMR_i = SKDTMR_i + 1$
(MAX. 255)

#70 $REQ_i = $ increasing pressure — NO

YES

#71
$WREF_i - SPEED_i \leqq C_8$
and $|\frac{d}{dt} SPEED_i| \leqq C_9 \cdot g$ — NO

YES

#72 $SKDFLG_i = 0$

#73 $SKDTMR_i = 0$

i=i+1

i=4

return

## Fig.7

```
                    start

                     i=0

#81
        < REQ_i =decreasing pressure >─── NO
                    YES

#82
        ┌─ d/dt SPEED_i ≦C_10·g ─┐
        │                        │─── YES
        └─ d²/dt² SPEED_i ≦C_11·g ┘
                    NO

#85
        < WREF_i −SPEED_i >─── YES
          ≧WREFH/2+C_12
                    NO                    #84
                                       K_i=−8
#86
        ┌─────────────────────────┐
        │ K_i = d/dt SPEED_i + d²/dt² SPEED_i │
        └─────────────────────────┘


                  ┌┄┄┐ ┄┄ S6
                  └┄┄┘

                  i=i+1

        <        i=4        >

                  return
```

$$\text{#81} \quad REQ_i = \text{decreasing pressure}$$

$$\text{#82} \quad \frac{d}{dt} SPEED_i \leqq C_{10} \cdot g$$

$$\frac{d^2}{dt^2} SPEED_i \leqq C_{11} \cdot g$$

$$\text{#83} \quad K_i = 8$$

$$\text{#85} \quad WREF_i - SPEED_i \geqq WREFH / 2 + C_{12}$$

$$\text{#84} \quad K_i = -8$$

$$\text{#86} \quad K_i = \frac{d}{dt} SPEED_i + \frac{d^2}{dt^2} SPEED_i$$

Fig. 8

road surface having low μ | road surface having high μ

RVSPEED

SPEEDi    WREFi

WCPi

STREi

STR

T1    T2    T3 T4    T5    T6

EP 0 619 208 B1

*Fig.9*

#42' $(-)\Delta WREF_i = -C_1 \cdot g - \dfrac{STR}{C_2} \times C_3$

$(MIN. C_4)$

## Fig.10

## Fig.11

```
                    ┌──────────┐
                    │   start  │
                    └──────────┘
                         │
        ┌───────────────────────────────────┐
  #1    │     input signals from stroke     │
        │    sensor S input signals from    │
        │      wheel speed sensor Wᵢ        │
        └───────────────────────────────────┘
                         │
        ┌───────────────────────────────────┐
  #2    │  calculate pedal stroke amount STR │
        │    calculate wheel speed SPEEDᵢ   │
        └───────────────────────────────────┘
                         │
        ┌───────────────────────────────────┐
  #7    │     calculate split component SPLIT│
        └───────────────────────────────────┘
                         │
        ┌───────────────────────────────────┐
  #3    │        calculate estimated        │
        │       vehicle speed WREFᵢ        │
        └───────────────────────────────────┘
                         │
        ┌───────────────────────────────────┐
  #4    │          detect lock sign         │
        └───────────────────────────────────┘
                         │
        ┌───────────────────────────────────┐
  #5    │   set up increasing or decreasing  │
        │        pressure signal Kᵢ         │
        └───────────────────────────────────┘
                         │
        ┌───────────────────────────────────┐
  #6    │   output increasing or decreasing  │
        │          pressure signal          │
        └───────────────────────────────────┘
                         │
                    ┌──────────┐
                    │  return  │
                    └──────────┘
```

EP 0 619 208 B1



## Fig.12

start

#121 — SPLTMR$_0 \neq 0$ and SPLTMR$_0 = 12 \cdot n$ — YES → #122 — SPLIT=SPLIT+1 (MAX. 8)

NO

#123 — SPLTMR$_1 \neq 0$ and SPLTMR$_1 = 12 \cdot n$ — YES → #124 — SPLIT=SPLIT−1 (MAX. −8)

NO

#125 — every 0.5sec. elapse — YES → #126 — add or reduce 1 to SPLIT toward close to 0

NO

return

## Fig.13

#131

high $\mu$ side

$$(-)\Delta WREF = -C_{13} \cdot g - \frac{MAX(STR,STRE_0 \sim STRE_3) \times \frac{8+|SPLIT|}{8}}{C_{14}} \times C_{15} \cdot g$$

(MIN. $C_{16}$)

low $\mu$ side

$$(-)\Delta WREF = -C_{13} \cdot g - \frac{MAX(STR,STRE_0 \sim STRE_3)}{C_{14}} \times C_{15} \cdot g$$

(MIN. $C_{16}$)

## Fig.14A

#141 $i=0,1$ — NO

YES

#142

SPLTMP$_i$ = SPLTMR$_i$ +1

MAX. 255

## Fig.14B

#143 $i=0,1$ — NO

YES

#144

SPLTMR$_i$ = 0

Fig. 15

EP 0 619 208 B1

## *Fig.16A*

#161

NO ← brake switch off / on edge ?

YES

#162

$\triangle$ SPEED $\geqq C_{15}$ — NO

#163 YES

TRNFLG=1

#164

TRNFLG=0

## *Fig.16B*

#165

TRNFLG=1 — NO

YES

#166

$$(-)\triangle WREF_i = -C_1 \cdot g \frac{MAX(STR,STRE_0 \sim STRE_3)}{C_2} \times C_3 \cdot g$$

$$(MIN. \ C_4)$$

#167

low speed rear wheel side ring

$$(-)\triangle WREF_i = -C_{16} \cdot g \frac{MAX(STR,STRE_0 \sim STRE_3)}{C_{17}} \times C_{18}$$

$$(MIN. \ C_{19})$$

high speed rear wheel side ring

$$(-)\triangle WREF_i = -C_{20} \cdot g \frac{MAX(STR,STRE_0 \sim STRE_3) \times C_{21}}{C_{22}} \times C_{23}$$

$$(MIN. \ C_{24})$$

## Fig.17

#171

$$\Delta WREF = C_{30} \times \frac{MAX(STR, STRE_0 \sim STRE_3)}{C_{31}} \times WREFH$$

$$\left( \begin{array}{l} MIN. \ C_{32} \times WREFH \\ MAX. C_{33} \times WREFH \end{array} \right)$$

i=0

#172 $\langle WREF_i \leq WREFH - \Delta WREF \rangle$ — YES

NO

#173 $WREF_i = WREFH - \Delta WREF$

i=i+1

i=4

## Fig.18

$\Delta WREF$

0.3WREFH

0.1WREFH

80/3          80

$MAX(STR, STRE_0 \sim STRE_3)$

## Fig.19

EP 0 619 208 B1

## Fig.20A

#191

$$(-)\Delta WREF_i = -1.25g$$

## Fig.20B

#192 $SKDTMR_i \geqq 128$ — YES

NO

#194

$$C_5 = 3 + \frac{MAX(STR, STRE_0 \sim STRE_3)}{16}$$

$$C_6 = - \frac{MAX(STR, STRE_0 \sim STRE_3)}{80}$$

$$C_7 = 5 + \frac{MAX(STR, STRE_0 \sim STRE_3)}{16}$$

#193

$$C_5 = 6 + \frac{MAX(STR, STRE_0 \sim STRE_3)}{32}$$

$$C_6 = - \frac{MAX(STR, STRE_0 \sim STRE_3)}{80}$$

$$C_7 = 5 + \frac{MAX(STR, STRE_0 \sim STRE_3)}{16}$$

Fig. 21

## Fig.22

## Fig.23

#221

$\langle$ $REQ_i$ = decreasing pressure $\rangle$ — NO

#222          YES

$$K_i' = f(K_i, MAX(STR, STRE_0 \sim STRE_3))$$

$$= K_i - (C_{34} - \frac{MAX(STR, STRE_0 \sim STRE_3)}{C_{35}}$$

## Fig.24

$$6 - \frac{MAX(STR, STRE_0 \sim STRE_3)}{10}$$

$MAX(STR, STRE_0 \sim STRE_3)$
(mm)

## Fig.25

EP 0 619 208 B1

## Fig. 26

#251

NO $\langle$ REQ $_i$ =decreasing pressure $\rangle$

YES

#252 $\langle$ i=0,2 $\rangle$ YES

NO

#254

$$K_i'=f(K_i,MAX(STR,STRE_0{\sim}STRE_3)\times\frac{8+SPLIT}{8})$$

$$=K_i-(C_{34}-\frac{MAX(STR,STRE_0{\sim}STRE_3)\times\frac{8+SPLIT}{8}}{C_{35}})$$

#253

$$K_i'=f(K_i,MAX(STR,STRE_0{\sim}STRE_3)\times\frac{8-SPLIT}{8})$$

$$=K_i-(C_{34}-\frac{MAX(STR,STRE_0{\sim}STRE_3)\times\frac{8-SPLIT}{8}}{C_{35}})$$

# Fig. 27

EP 0 619 208 B1

*Fig.28*